# EUROPÄISCHE PATENTSCHRIFT

(11) **EP 2 431 932 B1**
(45) Veröffentlichungstag und Bekanntmachung des Hinweises auf die Patenterteilung: **13.11.2013**
(21) Anmeldenummer: 11180695.6
(22) Anmeldetag: 09.09.2011
(51) Int. Cl.: G06Q 10/00

(54) **Verfahren und Vorrichtung zum Verarbeiten von Gegenständen mittels eines Zwischenspeichers und einer Sortieranlage.**
Method and device for processing objects using an interim storage device and a sorting assembly
Procédé et dispositif de traitement d'objets à l'aide d'un dispositif de stockage intermédiaire et d'une installation de tri

(30) Priorität: 15.09.2010 DE 102010040841
(43) Veröffentlichungstag der Anmeldung: 21.03.2012
(73) Patentinhaber: Siemens Aktiengesellschaft, 80333 München (DE)
(72) Erfinder: Bretschneider, Peter, 16547 Birkenwerder (DE)

(56) Entgegenhaltungen:
- US-A1- 2008 154 751

## Beschreibung

Die Erfindung betrifft ein Verfahren und eine Vorrichtung zum Verarbeiten von Gegenständen, insbesondere von flachen Postsendungen.

Mehrere Postunternehmen bieten jeweils einen Dienst an, bei dem ein Empfänger einer physikalischen Postsendung via Internet über das Eintreffen der Postsendung in einem Sortierzentrum, einem Zustell-Postamt oder einer sonstigen Annahmestation ("mail room") informiert wird. Beispielsweise wird mindestens ein rechnerverfügbares Abbild des Umschlags der Postsendung in einem persönlichen elektronischen Postfach im Internet bereitgestellt. Der Empfänger legt fest, was mit der Postsendung geschehen soll, z. B. Zustellung an eine vom Empfänger festgelegten Zustelladresse, Abscannen und Übermittlung des Inhalts via Internet oder Vernichten der als unerwünscht eingestuften Postsendung. Nachdem der Inhalt abgescannt wurde, will der Empfänger oft die Postsendung doch physikalisch zugestellt haben.

In US 2007/0226088 A1 wird ein "item management process 100" für physikalische Postsendungen beschrieben. Die physikalischen Postsendungen gelangen zu einer Annahmestation, werden zwischengespeichert und bearbeitet und bei Bedarf wieder aus dem Speicher herausgesucht. Beispielsweise wird eine Postsendung geöffnet, und jeweils ein Abbild von jedem Dokument in den Briefumschlag der Postsendung wird erzeugt.

Ein Verfahren zum Handhaben von Gegenständen ist beispielsweise aus der US-Offenlegungsschrift US 2006/0122858 A1 bekannt. Bei diesem vorbekannten Verfahren werden Gegenstände, wie beispielsweise Briefsendungen, in einem Lager gelagert, das sich entfernt von den Besitzern der Gegenstände befindet. Zur Lagerung der Gegenstände werden diese zumindest zum Teil bildlich erfasst. Außerdem wird jedem Gegenstand eine individuelle Identifizierung zugeordnet. Die Lage des Gegenstandes in dem Lager wird mit der individuellen Identifizierung verknüpft und gespeichert.

Ein anderes Verfahren zum Handhaben von Gegenständen ist in der US-Offenlegungsschrift 2006/0253405 A1 beschrieben. Bei diesem Verfahren werden mit Hilfe eines Scanners Briefsendungen erfasst. Eine Workstation ist dazu vorgesehen, ein mit dem Scanner erfasstes Bild der Briefsendung mit einem damit in Beziehung gebrachten zweiten Bild an einen entfernt befindlichen Empfänger zu übersenden, um Instruktionen bezüglich der Handhabung der jeweiligen Briefsendung zu erhalten.

Aus der US-Offenlegungsschrift US 2008/0154751 A1 ist ein Verfahren zum Handhaben von Gegenständen bekannt, bei dem Gegenstände in einem Lager gelagert werden, wobei Informationen über die Größe der jeweiligen Gegenstände erfasst werden. Die Lagerung der Gegenstände erfolgt in Abhängigkeit von der jeweiligen Gegenstandsgröße.

Die US-Offenlegungsschrift US 2007/0226088 A1 offenbart ein Verfahren zum Lagern von Briefsendungen, bei dem die Bewegung der Briefsendungen mit Hilfe einer Videoeinrichtung verfolgt wird.

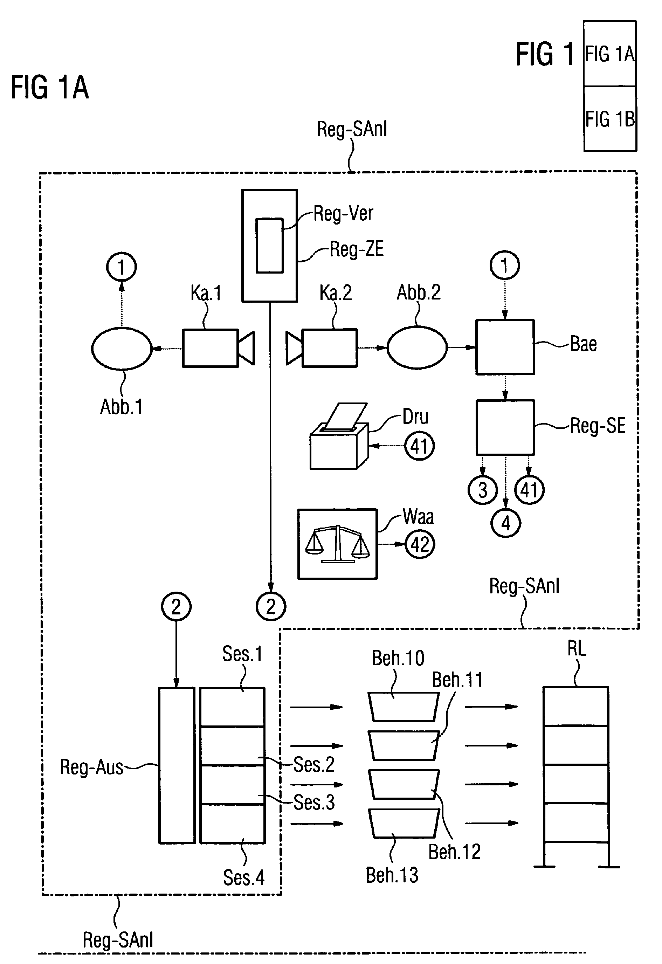

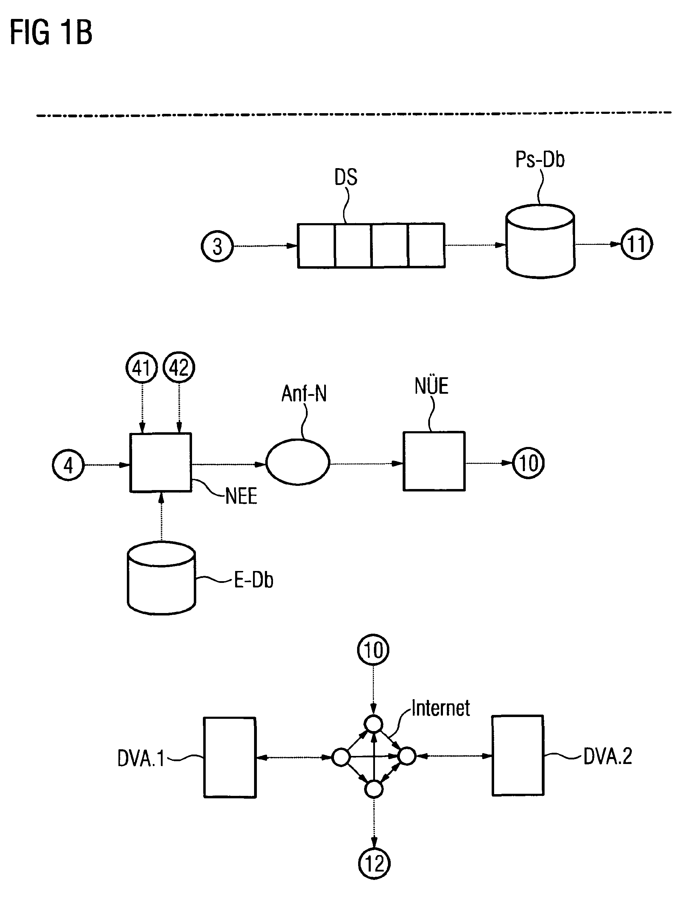

In DE 10 2005 033 644 A1 werden ein Verfahren und eine Vorrichtung zum Verarbeiten von plattenförmigen Werkstücken beschrieben. Die Werkstücke sollen gemäß einer Sortiervorschrift sortiert werden. Zwischen zwei Pufferanordnungen 10, 10' erstreckt sich eine Förderanordnung 30 mit einem Förderstrang 32 und einem darunter angeordneten Rückförderstrang 34. Eine Übergabeeinrichtung 20 vermag ein plattenförmiges Werkstück 2 aus einer Pufferanordnung 10, 10' zu entnehmen und auf die Förderanordnung 30 zu verbringen, vgl. Fig. 1**.** Die Werkstücke 2 werden in Fächern 18 der Pufferanordnung 10, 10' parallel nebeneinander gespeichert, wobei die Fächer 18 durch jeweils zwei Arme 16 gebildet werden. Die Arme 16 laufen endlos um einen Grundkörper herum. Ein Werkstück 2 wird dann zwischen zwei Arme 16 eingeschoben, wenn die Arme parallel zueinander angeordnet sind. Ein Ausschieber 22 vermag ein Werkstück 2 wieder aus einem Fach 18 auszuschieben. Um eine gewünschte Reihenfolge von Werkstücken 2 auf dem Förderstrang 32 herzustellen, nimmt eine Übergabeeinrichtung 20 die jeweils benötigten Werkstücke 2 aus der Pufferanordnung 10, 10' und legt ein entnommenes Werkstück 2 mittels des Ausschiebers 22 und mittels verdrehbarer Zwischenschächte 24 auf den Förderstrang 32 ab. Falls ein Werkstück 2 den Auslauf einer Pufferanordnung 10, 10' erreicht, bevor das Werkstück 2 entnommen wird, so wird das Werkstück 2 in der Pufferanordnung 10, 10' belassen. Oder das Werkstück 2 wird über den Rückförderstrang 34 oder über den Förderstrang 32 wieder zurück zur Pufferanordnung 10, 10' transportiert.

In DE 10 2008 015 075 A1 wird ein Verfahren beschrieben, um Postsendungen zu sortieren. Jede zu sortierende Postsendung durchläuft einmal eine Sortieranlage, wird zu einer zweiten Sortieranlage transportiert und durchläuft ein zweites Mal eine Sortieranlage. Beim ersten Durchlauf wird ein Bearbeitungs-Attribut gemessen. Außerdem werden mehrere Merkmale gemessen. Ein Datensatz mit den gemessenen Merkmals-Werten und dem gemessenen Bearbeitungs-Attribut wird erzeugt und abgespeichert. Beim erneuten Durchlauf werden erneuten die Merkmals-Werte gemessen. Der Datensatz mit dem ähnlichsten Merkmals-Wert wird ermittelt, und dessen Bearbeitungs-Attribut wird für den weiteren Transport der Postsendung verwendet.

In DE 10 2007 058 579 A1 wird ein Verfahren beschrieben, um mittels einer Sortieranlage flache Postsendungen zu sortieren. Die Sortieranlage Anl-1 schleust die Postsendungen nacheinander in ein Ausgabefach Af aus. Ein Anfangs-Signalstart wird erzeugt. Jede Postsendung, die für diesen Anfangs-Signalstart in das Ausgabefach Af ausgeschleust wurde, wird aus dem Ausgabefach Af entnommen. Alle weiteren Postsendungen werden aus dem Ausgabefach Af in einen Behälter Beh-1 verbracht. Sobald dieses Verbringen abgeschlossen ist, wird ein Ende-Signal Q1 erzeugt. Abgespeichert wird, welche Postsendungen zwischen dem Anfangs-Signalstart und dem Ende-Signal Q1 in den Behälter Beh-1 verbracht wurden.

Der Erfindung liegt die Aufgabe zugrunde, ein Verfahren und eine Vorrichtung zum Verarbeiten von mehreren Gegenständen bereitzustellen, wobei die Gegenstände zwischengespeichert werden, in nicht vorhersehbarer Reihenfolge Nachrichten eintreffen, die sich auf jeweils mindestens einen Gegenstand beziehen und eine Handlung zum Verarbeiten dieses Gegenstands spezifizieren und wobei die spezifizierte Handlung spätestens nach einer vorgegebenen Zeitspanne durchgeführt sein soll, wobei die mechanische Belastung für jeden Gegenstand geringer als bei bekannten Verfahren sein soll.

Die Aufgabe wird durch ein Verfahren mit den Merkmalen des Anspruchs 1 und eine Vorrichtung mit den Merkmalen des Anspruchs 11 gelöst. Vorteilhafte Ausgestaltungen sind in den Unteransprüchen angegeben.

Durch das lösungsgemäße Verfahren und die lösungsgemäße Vorrichtung werden mehrere Gegenstände verarbeitet. Jeder zu verarbeitende Gegenstand ist mit jeweils einer Kennzeichnung versehen. Möglich ist, dass verschiedene Gegenstände mit derselben Kennzeichnung versehen sind. Jeder auftretenden Kennzeichnung eines Gegenstands ist jeweils mindestens eine Nachrichten-Adresse zugeordnet. Verschiedenen Kennzeichnungen kann dieselbe Nachrichten-Adresse zugeordnet sein.

Vorgegeben werden
- ein Ausführungs-Zeitpunkt oder eine Abfolge mit mehreren aufeinander folgenden Ausführungs-Zeitpunkten und mindestens ein maximaler Aufbewahrungs-Zeitraum. Durchgeführt werden
- ein Registrierungs-Sortierlauf,
- für jeden Ausführungs-Zeitpunkt jeweils ein Ausführungs-Durchlauf und
- eine Individual-Ausführung pro Gegenstand mit Antwort-Nachricht während des mindestens einen Aufbewahrungs-Zeitraums.

Für den Registrierungs-Sortierlauf wird eine Registrierungs-Sortieranlage verwendet, für jeden Ausführungs-Durchlauf eine Ausführungs-Sortieranlage. Möglich ist, dass dieselbe Sortieranlage sowohl als Registrierungs-Sortieranlage als auch als Ausführungs-Sortieranlage verwendet wird. Außerdem wird mindestens ein Zwischenspeicher verwendet. Alle zu verarbeitenden Gegenstände lassen sich auf einmal in dem verwendeten Zwischenspeicher oder durch Aufteilung auf die Menge der verwendeten Zwischenspeicher zwischenspeichern. Möglich ist auch, nacheinander verschiedene Zwischenspeicher zu verwenden, wobei jeder Zwischenspeicher alle Gegenstände aufzunehmen vermag, die jetzt noch zwischenzuspeichern sind.

Zunächst wird der Registrierungs-Sortierlauf durchgeführt. Im Verlauf dieses Registrierungs-Sortierlaufs durchlaufen alle Gegenstände einmal die Registrierungs-Sortieranlage. Für jeden zu verarbeitenden Gegenstand werden im Registrierungs-Sortierlauf folgende Schritte durchgeführt:
- Die Registrierungs-Sortieranlage entziffert die Kennzeichnung, mit der der Gegenstand versehen ist, oder ermittelt auf andere Weise diese Kennzeichnung auf dem Gegenstand.
- Eine Anfrage-Nachricht wird erzeugt. Diese erzeugte Anfrage-Nachricht umfasst mindestens eine Information über den Gegenstand.
- Eine zugeordnete Nachrichten-Adresse wird in Abhängigkeit von der entzifferten Kennzeichnung auf dem Gegenstand ermittelt.
- Der Vorgang, die erzeugte Anfrage-Nachricht an die ermittelte Nachrichten-Adresse zu übermitteln, wird ausgelöst. Beispielsweise wird die Anfrage-Nachricht in ein Weitverkehrs-Netz geschickt ("push").
- Möglich ist auch, einen Hinweis auf die Anfrage-Nachricht zu übermitteln. Beispielsweise wird die Anfrage-Nachricht in einem Internet-Portal zur Verfügung gestellt ("pull").
- Die Registrierungs-Sortieranlage schleust den Gegenstand aus.
- Der Gegenstand wird in einen Zwischenspeicher verbracht.

Damit ist der Registrierungs-Sortierlauf beendet.

Nach Abschluss des Registrierungs-Sortierlaufs wird zu jedem vorgegebenen Ausführungs-Zeitpunkt der Vorgang ausgelöst, dass folgende beiden Schritte durchgeführt werden:
- Alle Gegenstände, die sich am Ausführungs-Zeitpunkt noch im Zwischenspeicher befinden, werden dem Zwischenspeicher entnommen.
- Ein Ausführungs-Durchlauf für den Ausführungs-Zeitpunkt wird durchgeführt, bei dem alle entnommenen Gegenstände die Ausführungs-Sortieranlage durchlaufen.

In jedem Ausführungs-Durchlauf werden für jeden Gegenstand, dessen Entnahme aus dem Zwischenspeicher an diesem Ausführungs-Zeitpunkt ausgelöst wurde, folgende Schritte durchgeführt:
- Geprüft wird, ob für diesen Gegenstand eine Antwort-Nachricht eingetroffen ist oder nicht.
- Hierbei wird als Antwort-Nachricht für den Gegenstand eine eintreffende Nachricht verwendet, die sich auf diesen Gegenstand bezieht und eine Handlung spezifiziert, die mit diesem Gegenstand durchzuführen ist.

Dann, wenn das Vorliegen einer Antwort-Nachricht für den Gegenstand festgestellt wird, werden die folgenden beiden Schritte durchgeführt:
- Der Gegenstand wird zu einer Bearbeitungsanlage transportiert.
- Mit dem Gegenstand wird diejenige Handlung, die in der eintreffenden Antwort-Nachricht spezifiziert ist, durchgeführt.

Falls für den Gegenstand keine Antwort-Nachricht vorliegt, wird der Gegenstand wieder in den Zwischenspeicher verbracht.

Damit ist dieser Ausführungs-Durchlauf beendet.

Möglich ist, dass ein Gegenstand bei jedem Ausführungs-Durchlauf wieder in den Zwischenspeicher verbracht wird, weil keine Antwort-Nachricht für diesen Gegenstand vorliegt. In der Regel befindet sich daher nach Abschluss des letzten Ausführungs-Durchlaufs noch mehrere Gegenstände im Zwischenspeicher. Möglich ist auch, dass sich der Aufbewahrungs-Zeitraum an den Registrierungs-Sortierlauf anschließt und die Ausführungs-Durchläufe zeitlich nach dem Aufbewahrungs-Zeitraum liegen.

Während des Aufbewahrungs-Zeitraums wird ein Gegenstand aufgrund einer Individual-Ausführung wieder aus dem Zwischenspeicher entnommen. Während des Aufbewahrungs-Zeitraums werden keine Ausführungs-Durchläufe durchgeführt. Die Individual-Ausführung von einem Gegenstand wird dann durchgeführt, wenn während des Aufbewahrungs-Zeitraums eine Antwort-Nachricht eintrifft, die sich auf diesen Gegenstand bezieht und eine Handlung spezifiziert. Die Individual-Ausführung für diesen Gegenstand umfasst folgende Schritte:
- Der Gegenstand wird aus dem Zwischenspeicher entnommen und zu einer Bearbeitungsanlage transportiert.
- Die Durchführung derjenigen Handlung wird ausgelöst, die in der eintreffenden Antwort-Nachricht spezifiziert ist.

Die Erfindung stellt sicher, dass nach einem vorgegebenen Abschluss-Zeitpunkt jeder Gegenstand gemäß einer Antwort-Nachricht verarbeitet worden ist, vorausgesetzt dass bis dahin eine Antwort-Nachricht vorliegt, welche sich auf diesen Gegenstand bezieht und eine Handlung spezifiziert. Dieser Abschluss-Zeitpunkt ist entweder das Ende des letzten Aufbewahrungs-Zeitraums oder der Abschluss des zeitlich letzten Ausführungs-Durchlaufs, je nach dem, welcher Zeitpunkt später liegt.

Die Erfindung bewirkt einen Kompromiss zwischen folgenden möglichen Verarbeitungsmethoden von Gegenständen:
1. Um die Gegenstände gemäß der Antwort-Nachrichten zu verarbeiten, werden ausschließlich Individual-Ausführungen durchgeführt, also ausschließlich auf eingehende Antwort-Nachrichten reagiert. Auf eingehende Antwort-Nachrichten wird dergestalt reagiert, dass der jeweils spezifizierte Gegenstand aus dem Zwischenspeicher entnommen und wie vorgegeben behandelt wird.
2. Um die Gegenstände gemäß den Antwort-Nachrichten zu verarbeiten, werden ausschließlich Ausführungs-Durchläufe durchgeführt, wobei in jedem Ausführungs-Durchlauf alle Gegenstände aus dem Zwischenspeicher entnommen werden.

Die erste Variante, also ausschließlich Individual-Ausführungen, erfordert viel Zeit, weil ein einzelner spezifizierter Gegenstand im Zwischenspeicher gesucht und gefunden werden muss. Je nach Ausgestaltung erfordert dies manuelle Sucharbeit durch einen Bearbeiter, jeweils einen gekennzeichneten Stellplatz pro Gegenstand oder einen Handhabungsautomaten, der automatisch per "maschinellem Sehen" einen Gegenstand im Zwischenspeicher zu finden vermag. Der Zwischenspeicher muss genügend Platz bieten, um einen bestimmten Gegenstand finden, greifen und entnehmen zu können.

Die zweite Variante, also ausschließlich Ausführungs-Durchläufe, belastet die Gegenstände mechanisch stärker als dies durch die vorliegende Erfindung geschieht. Bei jedem Ausführungs-Durchlauf wird jeder Gegenstand, der sich zuvor noch im Zwischenspeicher befand, durch die Ausführungs-Sortieranlage transportiert und wird dabei zwangsläufig Beschleunigungen und Verzögerungen und möglicherweise auch Dreh- oder Kippbewegungen unterzogen. Dies geschieht auch dann, wenn für den Gegenstand bis zum letzten Ausführungs-Durchlauf keine Antwort-Nachricht vorliegt.

Die Erfindung stellt einen Kompromiss zwischen diesen beiden extremen Varianten bereit. Die Anordnung lässt sich parametrieren um für eine bestimmte Anwendung einen guten Kompromiss zu erzielen.

Insbesondere folgende Parameter lassen sich variieren, um vorgegebene Ziele hinsichtlich Zeitaufwand, Reaktionszeit auf Antwort-Nachrichten, Verarbeitungskosten und mechanische Belastung der Gegenstände zu erreichen, wobei der Zwischenspeicher, die Registrierungs-Sortieranlage und die Ausführungs-Sortieranlage vorgegeben sind:
- die Anzahl der Ausführungs-Zeitpunkte und damit auch die Anzahl der Ausführungs-Durchläufe,
- der zeitliche Abstand zwischen zwei aufeinander folgenden Ausführungs-Zeitpunkten, der von Ausführungs-Zeitpunkt zu Ausführungs-Zeitpunkt variieren kann, ob der Aufbewahrungs-Zeitraum nach dem letzten Ausführungs-Zeitpunkt beginnt, vor dem ersten Ausführungs-Zeitpunkt endet oder zwischen zwei Ausführungs-Zeitpunkten liegt, und
- der Anfang und das Ende des Aufbewahrungs-Zeitraums.

Diese Parameter lassen sich variieren, ohne irgendwelche mechanischen Veränderungen an einer Sortieranlage oder einem Zwischenspeicher vornehmen zu müssen.

Die Antwort-Nachrichten können in zufälliger Reihenfolge und zu zufälligen, nicht vorhersehbaren Zeitpunkten eintreffen. Möglich ist, in einer Erprobungsphase die Zeitpunkte, an denen Anfrage-Nachrichten eintreffen, zu messen, diese Messergebnisse statistisch auszuwerten und die gerade genannten Parameter abhängig von der statistischen Auswertung anzupassen. Beispielsweise beginnt der Aufbewahrungs-Zeitraum nach dem letzten Ausführungs-Zeitpunkt. Die Ausführungs-Zeitpunkte werden so gelegt, dass - gemäß der statistischen Auswertung - zu erwarten ist, dass nach dem letzten Ausführungs-Durchlauf noch maximal x% der Gegenstände sich im Zwischenspeicher befinden und alle übrigen Gegenstände bereits gemäß einer Antwort-Nachricht verarbeitet worden sind.

Die Erfindung spart - im Vergleich zur ersten Variante (nur Individual-Ausführungen) - Speicherplatz im Zwischenspeicher ein, ohne dass ein zusätzlicher Arbeitsschritt erforderlich ist, um den Speicherplatz freizumachen. Um einen Ausführungs-Durchlauf durchzuführen, werden alle Gegenstände, die sich noch im Zwischenspeicher befinden, dem Zwischenspeicher entnommen. Nach diesem Ausführungs-Durchlauf werden in einem Schritt alle Gegenstände ohne Antwort-Nachricht wieder in den Zwischenspeicher verbracht.

Der Zwischenspeicher kann räumlich getrennt von der Sortieranlage oder von allen Sortieranlagen aufgestellt sein, so dass sich unterschiedliche Anforderungen realisieren lassen. Jeder Sortieranlage sind Gegenstände zuzuführen. Jede Sortieranlage muss von Zeit zu Zeit gewartet werden, und u.U. sind Störungen zu beseitigen. Aus dem Zwischenspeicher sind Gegenstände zu entnehmen, und umgekehrt sind Gegenstände in den Zwischenspeicher einzustellen. Dies erfordert oft unterschiedliche Wartungsarbeiten.

Während des Aufbewahrungs-Zeitraums wird weder die Registrierungs-Sortieranlage noch die Ausführungs-Sortieranlage benötigt, um diese Gegenstände zu verarbeiten. Daher lassen sich diese Sortieranlagen während des Aufbewahrungs-Zeitraums dazu verwenden, um weitere Gegenstände zu verarbeiten und/oder um Wartungs- oder Reparaturarbeiten an ihnen auszuführen.

Der Zwischenspeicher kann mechanisch einfach aufgebaut sein. Im einfachsten Fall besitzt der Zwischenspeicher überhaupt keine beweglichen Teile, sondern nur feststehende Teile.

Die jeweilige Kennzeichnung, mit der jeder zu verarbeitende Gegenstand versehen ist, kann eine Kennzeichnung eines Zielpunkts sein, an den der Gegenstand zu transportieren ist, oder eine Kennzeichnung einer natürlichen oder juristischen Person, die diesen Gegenstand erhalten soll. Möglich ist auch, dass die Kennzeichnung eine eindeutige Kennung ist, die diesen Gegenstand von allen anderen innerhalb eines bestimmten Zeitraums zu verarbeitenden Gegenständen unterscheidet. Die Kennzeichnung kann auch die Art des Gegenstands kennzeichnen, insbesondere wenn diese Art von außen nicht optisch zu erkennen ist.

In einer Ausgestaltung umfasst die Anfrage-Nachricht als Information über den Gegenstand diese ermittelte Gegenstands-Kennzeichnung. In einer anderen Ausgestaltung umfasst die Anfrage-Nachricht ein rechnerverfügbares Abbild des Gegenstands. Die Anfrage-Nachricht kann sowohl eine Gegenstands-Kennzeichnung als auch ein Abbild umfassen.

In einer Ausgestaltung ist ein zu verarbeitender Gegenstand dadurch mit einer Zielpunkt-Kennzeichnung versehen, dass eine alphanumerische Kennzeichnung des Zielpunkts auf den Gegenstand aufgebracht ist, z. B. eine postalische Zustelladresse. In einer anderen Ausgestaltung ist eine maschinenlesbare Kennung des Zielpunkts, z. B. ein Strichmuster, aufgedruckt. Dies ist z. B. für die Gepäckstücke von Fluggästen bekannt. Möglich ist auch, dass auf den Gegenstand eine maschinenlesbare Kennung aufgebracht ist, z. B. ein "identifier", und in einer Datenbank ein Datensatz mit dieser Kennung und der Zielpunkt-Kennzeichnung hinterlegt ist. Die Zielpunkt-Kennzeichnung lässt sich ermitteln, indem die Kennung auf dem Gegenstand gelesen wird und eine Suchanfrage an diese Datenbank mit der Kennung übermittelt wird.

Vorzugsweise werden mehrere Zwischenspeicher verwendet. Diese Zwischenspeicher können auch verschiedene Bereiche desselben Zwischenspeichers sein. Diese Zwischenspeicher können sich in ihrer jeweiligen Aufnahme-Kapazität voneinander unterscheiden. In jedem Ausführungs-Durchlauf wird ermittelt, welche Aufnahmekapazität für diejenigen Gegenstände benötigt wird, die in diesem Ausführungs-Durchlauf die Ausführungs-Sortieranlage durchlaufen und für die bislang keine Antwort-Nachricht vorliegt. Abhängig von der ermittelten benötigten Aufnahmekapazität wird ein Zwischenspeicher mit ausreichender Aufnahmekapazität ausgewählt. Diese Ausgestaltung ermöglicht es, vorhandene Zwischenspeicher so gut als möglich auszunutzen. Zu einem Zeitpunkt nur jeweils ein Zwischenspeicher benötigt.

In einer Ausgestaltung liegt der Aufbewahrungs-Zeitraum nach dem zeitlich letzten Ausführungs-Zeitpunkt. Oder der Aufbewahrungs-Zeitraum beginnt zum letzten Ausführungs-Zeitpunkt. In dieser Ausgestaltung wird zunächst jeder Ausführungs-Durchlauf durchgeführt und abgeschlossen, bevor der Aufbewahrungs-Zeitraum beginnt. Diese Ausgestaltung ermöglicht es, insbesondere dann viele Gegenstände bereits durch die Ausführungs-Durchläufe auszuschleusen und so wie spezifiziert zu behandeln, wenn viele Antwort-Nachrichten nach dem Registrierungs-Sortierlauf eintreffen und nur wenige Antwort-Nachrichten lange nach dem Registrierungs-Sortierlauf. In dieser Ausgestaltung werden viele Gegenstände also durch einen stärker automatisierbaren Ausführungs-Durchlauf erfasst, und die aufwendige Individual-Ausführung für einen Gegenstand während des Aufbewahrungs-Zeitraums ist seltener erforderlich.

In einer anderen Ausgestaltung liegt der Aufbewahrungs-Zeitraum zeitlich vor dem ersten Ausführungs-Durchlauf. Dies ermöglicht es, solche Gegenstände bereits vor dem ersten Ausführungs-Durchlauf und damit ohne eine größere mechanische Belastung zu behandeln, für die frühzeitig Antwort-Nachrichten eintreffen. Es liegt dann am Absender einer Antwort-Nachricht, seine Antwort-Nachricht so früh abzusenden, dass für den Gegenstand ein Ausführungs-Durchlauf vermieden wird. Möglich ist es, in der Anfrage-Nachricht auf den ersten Ausführungs-Zeitpunkt hinzuweisen. Diese Ausgestaltung reduziert für Gegenstände, für die frühzeitig Antwort-Nachrichten eintreffen, die mechanischen Belastungen, weil für diese Gegenstände kein Ausführungs-Durchlauf durchgeführt wird.

In einer dritten Ausgestaltung werden ein erster Aufbewahrungs-Zeitraum und ein zweiter Aufbewahrungs-Zeitraum vorgegeben. Die Ausführungs-Zeitpunkte liegen zwischen diesen beiden Aufbewahrungs-Zeiträumen. In jedem Aufbewahrungs-Zeitraum wird ein Gegenstand dann aus dem Zwischenspeicher entnommen, wenn eine Antwort-Nachricht für diesen Gegenstand eingetroffen ist.

Vorzugsweise ist der zeitliche Abstand zwischen dem ersten und dem zweiten Ausführungs-Zeitpunkt kleiner als der zeitliche Abstand zwischen dem zweiten und dem dritten Ausführungs-Zeitpunkt. Damit verstreicht zwischen dem Beginn des ersten Ausführungs-Durchlaufs und dem Beginn des zweiten Ausführungs-Durchlaufs weniger Zeit als zwischen dem Beginn des zweiten Ausführungs-Durchlaufs und dem Beginn des dritten Ausführungs-Durchlaufs. Diese Ausgestaltung führt vor allem dann zu einer raschen Reaktion auf Antwort-Nachrichten, wenn zunächst viele und dann immer weniger Antwort-Nachrichten eintreffen.

In einer Ausgestaltung umfasst der Schritt, Gegenstände in den Zwischenspeicher zu verbringen, die Schritte, die Gegenstände aus der jeweils verwendeten Sortieranlage zu entnehmen und in Behälter zu verbringen und in diese Behälter zu dem Zwischenspeicher zu transportieren. Umgekehrt umfasst der Schritt, Gegenstände aus dem Zwischenspeicher zu entnehmen, die Schritte, die Gegenstände in den Behältern zu der Ausführungs-Sortieranlage zu transportieren und dann aus den jeweils verwendeten Behältern zu entnehmen.

In einer anderen Ausgestaltung wird jeder Gegenstand während des Registrierungs-Sortierlaufs mit einer Haltevorrichtung ("holder") verbunden und verbleibt in dieser Haltevorrichtung, bis der Gegenstand zu einer Bearbeitungsanlage zu transportieren ist, weil eine Antwort-Nachricht vorliegt, oder verbleibt in der Haltevorrichtung sogar bis zum Erreichen dieser Bearbeitungsanlage.

In einer Ausgestaltung wird dieselbe Sortieranlage sowohl als Registrierungs-Sortieranlage als auch als Ausführungs-Sortieranlage verwendet. In einer anderen Ausgestaltung werden eine Sortieranlage als Registrierungs-Sortieranlage und eine andere Sortieranlage als Auslieferungs-Sortieranlage verwendet.

Vorzugsweise werden die Anfrage-Nachricht und die Antwort-Nachricht in elektronischer Form, z. B. als E-Mail oder als digitalisierte Sprachnachricht, versandt. Möglich ist auch, dass die Anfrage-Nachricht und/oder die Antwort-Nachricht in Form einer Postsendung versandt werden, z. B. als Benachrichtigungs- bzw. Antwort-Postkarte.

Der Nachrichten-Adresse wird vorzugsweise ermittelt, indem abhängig von der Kennzeichnung auf dem Gegenstand eine Nachrichten-Adresse aus einer vorgegebenen Menge von Nachrichten-Adressen ausgewählt wird. Beispielsweise bezeichnet jede Kennzeichnung auf einem Gegenstand eine natürliche oder juristische Person, die den Gegenstand erhalten soll, und die Nachrichten-Adresse ist eine abgespeicherte elektronische oder postalische Adresse dieser Person. Diese Menge von Nachrichten-Adressen enthält die möglichen Nachrichten-Adressen vorzugsweise in elektronischer Form. Die Nachrichten-Adressen sind z. B. E-Mail-Adresse oder Telefonnummern oder FAX-Nummern oder auch Kennungen von datenverarbeitenden Geräten.

In einer Ausgestaltung wird die Anfrage-Nachricht in jedem Fall an die ermittelte Nachrichten-Adresse übermittelt ("push"). Beispielsweise wird eine Benachrichtigung in Form einer E-Mail an die Nachrichten-Adresse übermittelt. Möglich ist auch, an die Nachrichten-Adresse einen Hinweis auf einen Speicherort zu übermitteln, wobei an diesem Speicherort die Anfrage-Nachricht abgespeichert ist. Die Benachrichtigung hat z. B. die Form einer E-Mail mit einem Hinweis in Form eines Internet-Links auf eine URL ("Uniform Resource Locator").

In einer anderen Ausgestaltung wird die Anfrage-Nachricht zur Abholung bereitgestellt ("pull"). Nach einer Authentifizierung kann ein registrierter Empfänger den Schritt auslösen, dass die Antwort-Nachricht an die Nachrichten-Adresse übermittelt wird. Beispielsweise wird im Internet ein Portal bereitgestellt. Ein registrierter Empfänger gibt ein Passwort ein oder authentifiziert sie auf andere Weise. Hat sich der Empfänger erfolgreich authentifiziert, so wird dem Empfänger die Möglichkeit gegeben, sich die Antwort-Nachrichten für Gegenstände an diesen Empfänger herunterzuladen.

Vorzugsweise besitzt die Ausführungs-Sortieranlage mindestens einen Zwischenspeicher-Sortierausgang und mindestens einen Bearbeitungs-Sortierausgang pro verwendeter Bearbeitungsanlage. Die Ausführungs-Sortieranlage schleust bei einem Ausführungs-Durchlauf jeden Gegenstand, für den eine Antwort-Nachricht vorliegt, in einen Bearbeitungs-Sortierausgang aus. Die Ausführungs-Sortieranlage schleust jeden Gegenstand, für den keine Antwort-Nachricht vorliegt, in einen Zwischenspeicher-Sortierausgang aus. Bei mehreren Zwischenspeichern gibt es vorzugsweise pro Zwischenspeicher jeweils mindestens einen Sortierausgang. Die Ausführungs-Sortieranlage steuert, wie viele Gegenstände in welchen Zwischenspeicher zu verbringen sind. Bei mehreren möglichen Handlungen hat die Ausführungs-Sortieranlage vorzugsweise mindestens einen Bearbeitungs-Sortierausgang pro möglicher Handlung und schleust einen Gegenstand abhängig von der spezifizierten Handlung in einen der Handlung zugeordneten Bearbeitungs-Sortierausgang aus.

Möglich ist, dass sich nach dem Ende des Abschluss-Zeitpunkts, der nach dem Aufbewahrungs-Zeitraum und nach dem letzten Ausführungs-Durchlauf liegt, noch Gegenstände im Zwischenspeicher befinden, nämlich weil für diese Gegenstände keine Antwort-Nachrichten eingetroffen sind. Vorzugsweise werden diese Gegenstände nach dem Abschluss-Zeitpunkt aus dem Zwischenspeicher entnommen und einer Standard-Behandlung unterzogen. Beispielsweise werden die Gegenstände an den jeweiligen Zielpunkt transportiert, der durch die Kennzeichnung auf dem Gegenstand vorgegeben ist. Möglich ist, dass für mindestens einen Zielpunkt eine Standard-Behandlung vorgegeben ist und alle Gegenstände mit einer Kennzeichnung dieses Zielpunktes dieser vorgegebenen Standard-Behandlung unterzogen werden.

Die Gegenstände sind z. B. flache Postsendungen (Standardbriefe, Großbriefe, Postkarten), Päckchen, Pakete oder auch Waren an bestimmte Empfänger. Die Gegenstände können auch Werkstücke sein, wobei jedes Werkstück zu jeweils einem Bestandteil einer Fertigungsanlage, z. B. für Fahrzeuge zu transportieren ist und wobei je nach Fertigungsfortschritt bestimmte Bestandteile der Fertigungsanlage zu bestimmten Zeitpunkten bestimmte Werkstücke benötigen und entsprechende Antwort-Nachrichten versenden. Die Anfrage-Nachrichten spezifizieren, welche Werkstücke aktuell zur Verfügung stehen. Die Gegenstände können auch Gepäckstücke von Reisenden sein, die getrennt von den Gepäckstücken reisen, z. B. Fluggäste oder Schiffspassagiere. Insbesondere lässt sich die Erfindung anwenden, um Reisende über das Auffinden verlorener Gepäckstücke zu informieren. Die Gegenstände können auch Frachtstücke sein. Die Gegenstände können auch Arzneimittel oder Kosmetika sein.

Im Folgenden wird die Erfindung anhand eines Ausführungsbeispiels beschrieben. Dabei zeigen:
- Fig. 1: schematisch die Registrierungs-Sortieranlage und die weiteren Bestandteile, die für den Registrierungs-Sortierlauf verwendet werden,
- Fig. 2: schematisch die Ausführungs-Sortieranlage und die weiteren Bestandteile, die für jeden Ausführungs-Durchlauf verwendet werden,
- Fig. 3: ein Flussdiagramm, welches die Schritte veranschau-licht, die bei dem Registrierungs-Sortierlauf durch-geführt werden,
- Fig. 4: die Schritte, die bei jedem Ausführungs-Durchlauf durchgeführt werden,
- Fig. 5: die Schritte, die bei jeder Individual-Ausführung durchgeführt werden und
- Fig. 6: auf einem Zeitstrahl die zeitliche Abfolge des Re- gistrierungs-Sortierlaufs, der Ausführungs-Durchläufe und der Individual-Ausführungen.

Im Ausführungsbeispiel wird die Erfindung eingesetzt, um Postsendungen (Postkarten, Standardbriefe, Großbriefe, Kataloge, Pakete, ...) zu verarbeiten. In einer Ausgestaltung umfasst diese Empfänger-Kennzeichnung den Namen einer natürlichen oder juristischen Person, welche der Empfänger der Postsendung ist, sowie eine postalische Adresse des Empfängers (Straße, Hausnummer oder Postfachnummer oder Paketfachnummer und Postleitzahl oder ZIP-Code und Ort).

In einer anderen Ausgestaltung umfasst diese Empfänger-Kennzeichnung den Empfänger-Namen sowie die postalische Adresse eines Post-Dienstleisters, welcher die Postsendungen zwischenspeichert und den Empfänger benachrichtigt und dabei die Verfahrensschritte durchführt, die im Folgenden beschrieben werden. Der Empfänger ist beim Post-Dienstleister registriert. Um die Postsendungen von verschiedenen Empfängern, die bei demselben Post-Dienstleister registriert sind, voneinander zu unterscheiden, ist die Postsendung mit einer Kennung des Empfängers versehen, z.B. mit einer Kundennummer. Möglich ist auch, dass auf die Postsendung eine Nachrichten-Adresse aufgebracht ist, z.B. eine E-Mail-Adresse des Empfängers.

Jede Postsendung besteht aus einem Verpackungselement, z. B. einem Briefumschlag oder einer Pakethülle, und einem oder mehreren Inhalts-Objekten, z. B. Blätter in einem Briefumschlag oder Gegenstände in einem Paket. Eine Ausnahme sind Postkarten - eine Postkarte fungiert selbst als Inhalts-Objekt. Eine Sonderform einer Postkarte ist ein "business reply mail item". Die Blätter sind in der Regel mit Zeichen und/oder Bildern versehen und lassen sich optisch erfassen.

Das Verfahren wird mit Hilfe einer Verarbeitungsanlage durchgeführt. Diese Verarbeitungsanlage umfasst im Ausführungsbeispiel
- eine Registrierungs-Sortieranlage zum Durchführen des weiter unten beschriebenen Registrierungs-Sortierlaufs,
- eine Ausführungs-Sortieranlage zum Durchführen jedes weiter unten beschriebenen Ausführungs-Durchlaufs,
- einen physikalischen Zwischenspeicher für Postsendungen,
- mindestens einen Bearbeitungsplatz für Postsendungen,
- einen Empfänger-Datenspeicher für registrierte Empfänger von Postsendungen,
- einen Postsendungs-Datenspeicher,
- eine Nachrichten-Erzeugungs-Einrichtung,
- eine Nachrichten-Übermittlungs-Einrichtung und
- eine Nachrichten-Auswerte-Einrichtung.

Die Registrierungs-Sortieranlage umfasst im Ausführungsbeispiel
- eine Zuführ-Einrichtung ("feeder") mit einem Vereinzeler ("singulator"),
- ein Lesegerät für Empfänger-Kennzeichnungen,
- einen Drucker oder Etikettierer,
- in einer Ausführungsform eine Waage,
- eine Vielzahl von Sortierendstellen und
- eine Steuerungseinheit.

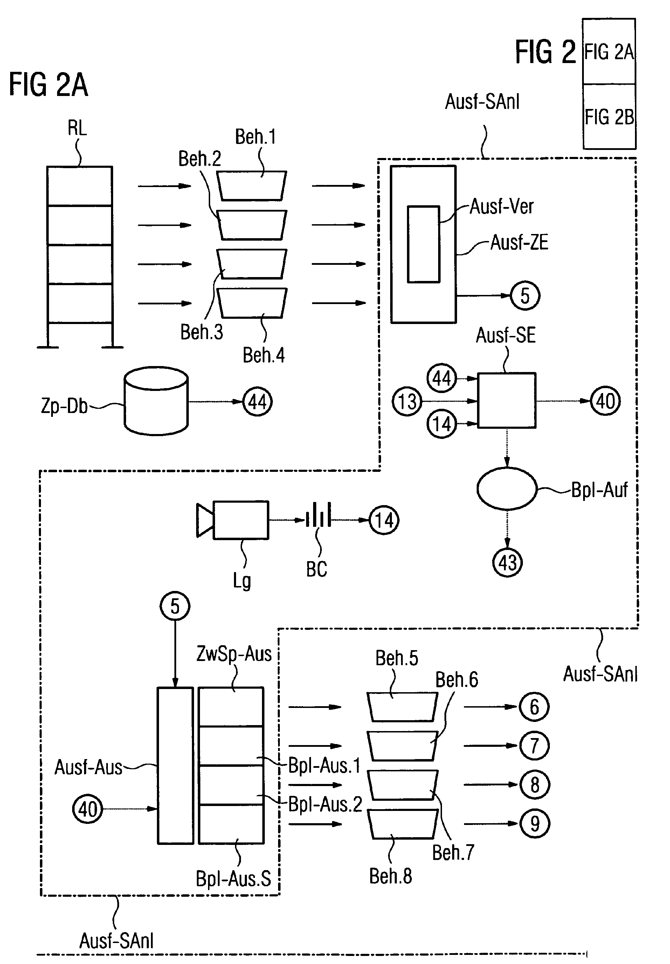

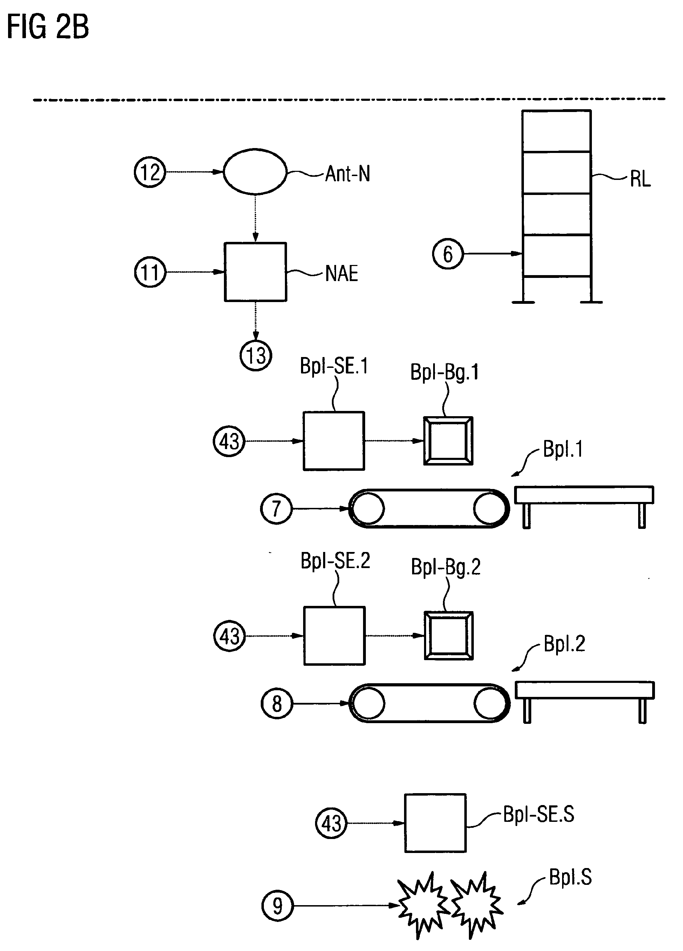

Fig. 1 zeigt schematisch die Registrierungs-Sortieranlage und die weiteren Bestandteile, die für den Registrierungs-Sortierlauf verwendet werden. In Fig. 1 und Fig. 2 bezeichnen durchgezogene Pfeile Materialflüsse, gestrichelte Pfeile Datenflüsse.

In Fig. 1 werden gezeigt:
- die Zuführ-Einrichtung Reg-ZE der Registrierungs-Sortieranlage Reg-SAnl mit dem Vereinzeler Reg-Ver,
- zwei Kameras Ka.1, Ka.2,
- eine Bildauswerteeinheit Bae,
- ein Drucker Dru,
- eine Waage Waa,
- eine Ausschleusungs-Einrichtung Reg-Aus,
- beispielhaft vier Sortierendstellen Ses.1, ..., Ses.4,
- die Steuerungseinheit Reg-SE der Registrierungs-Sortieranlage Reg-SAnl,
- der Empfänger-Datenspeicher E-Db,
- der Postsendungs-Datenspeicher Ps-Db,
- die Nachrichten-Erzeugungs-Einrichtung NEE,
- die Nachrichten-Übermittlungs-Einrichtung NÜE und
- die Nachrichten-Auswerte-Einrichtung NAE.

Die Zuführ-Einrichtung Reg-ZE ist dazu ausgestaltet, Postsendungen so den weiteren Bestandteilen der Registrierungs-Sortieranlage Reg-SAnl zuzuführen, dass die Registrierungs-Sortieranlage diese Postsendungen zu sortieren vermag. Der Vereinzeler ("singulator") Reg-Ver vereinzelt Postsendungen und zieht hierbei Postsendungen, die sich überlappen, auseinander. Im Falle von flachen Postsendungen erzeugt der Vereinzeler Reg-Ver einen Strom von zueinander beabstandeten und aufrecht stehenden Postsendungen. Pakete zieht der Vereinzeler Reg-Ver so auseinander, dass sie sich nicht überlappen.

Das Lesegerät umfasst ein Bildaufnahmegerät und eine Bildauswerteeinheit. Das Bildaufnahmegerät erzeugt mindestens ein rechnerverfügbares Abbild von derjenigen Oberfläche der Postsendung, welche mit der Empfänger-Kennzeichnung versehen ist.

Im Beispiel von Fig. 1 umfasst das Bildaufnahmegerät die beiden Kameras Ka.1, Ka.2, die jeweils ein rechnerverfügbares Abbild Abb.1, Abb.2 von jeder Oberfläche einer aufrecht stehend transportierten Postsendung erzeugen. Diese Abbilder Abb.1, Abb.2 werden an die Bildauswerteeinheit Bae übermittelt.

Die Bildauswerteeinheit Bae wertet jedes rechnerverfügbare Abbild Abb.1, Abb.2 aus, um die Empfänger-Kennzeichnung zu entziffern. Die Bildauswerteeinheit Bae umfasst eine OCR-Einheit, welche per "optical character recognition" (OCR) die Empfänger-Kennzeichnung zu entziffern versucht. Gelingt dies nicht, so gibt ein Bearbeiter einen Teil der Empfänger-Kennzeichnung per Tastatur ("video coding") oder per Spracheingabe ("speech recognition") ein.

Jede Sortierendstelle Ses.1, ..., Ses.4 der Registrierungs-Sortieranlage Reg-SAnl vermag jeweils mehrere Postsendungen aufzunehmen. Im Falle von flachen Postsendungen vermag die Registrierungs-Sortieranlage Reg-SAnl in jeder Sortierendstelle Ses.1, ..., Ses.4 jeweils einen Stapel von Postsendungen zu erzeugen. Diese gestapelten Postsendungen stehen z. B. aufrecht auf jeweils einer Kante. Die Postsendungen können auch in der Sortierendstelle Ses.1, ..., Ses.4 liegen.

Im Empfänger-Datenspeicher E-Db ist für jeden registrierten Empfänger von Postsendungen jeweils ein Datensatz abgespeichert. Dieser Datensatz umfasst
- eine eindeutige interne Kennung für den registrierten Empfänger, der diesen Empfänger von allen anderen registrierten Empfängern unterscheidet,
- mindestens eine Empfänger-Kennzeichnung, mit denen Postsendungen an diesen registrierten Empfänger versehen sein können, wobei für einen registrierten Empfänger mehrere mögliche Empfänger-Kennzeichnungen abgespeichert sein können,
- mindestens eine Nachrichten-Adresse für Anfrage-Nachrichten an diesen Empfänger, wobei die Nachrichtenadresse z. B. eine E-Mail-Adresse, eine Telefonnummer, eine Faxnummer oder auch eine Postadresse sein kann und wobei für einen Empfänger mehrere verschiedene Nachrichten-Adressen abgespeichert sein können,
- bei mehreren Nachrichten-Adressen für den gleichen Empfänger eine Auswahlregel zum Auswählen einer Nachrichten-Adresse, wobei die Auswahlregel z. B. vom Anfrage-Zeitpunkt und/oder von der Art der Postendung abhängt,
- die Kennzeichnung einer tatsächlichen Zustelladresse, an welche die Postsendung an diesen Empfänger tatsächlich transportiert werden soll, wobei diese Zustelladress-Kennzeichnung mit einer möglichen Empfänger-Kennzeichnung übereinstimmen kann oder auch von jeder abgespeicherten Empfänger-Kennzeichnung abweichen kann.

In einer Ausführungsform stimmt eine mögliche Empfänger-Kennzeichnung auf einer Postsendung an einen registrierten Empfänger mit der Kennzeichnung einer Zustelladresse überein, an welche die Postsendung tatsächlich transportiert werden soll.

In einer anderen Ausführungsform werden spezielle Empfänger-Kennzeichnungen für Postsendungen an registrierte Empfänger verwendet, die z. B.
- aus dem Namen des Empfängers,
- einer Kennung des Empfängers z. B. in Form von "Postfach 123" sowie
- dem Namen und der Adresse eines Dienstleisters besteht.

Die Ausführungsform mit den speziellen Empfänger-Kennzeichnungen erspart dem registrierten Empfänger die Notwendigkeit, seine tatsächliche Zustelladresse an mögliche Absender bekanntzugeben. Dieser Dienstleister führt dann die nachfolgend beschriebenen Verfahrensschritte durch. Ein Ausführungs-Durchlauf für eine erste Menge von Postsendungen kann zeitlich überlappend mit dem Registrierungs-Sortierlauf für eine nachfolgende Zeitmenge von Postsendungen durchgeführt werden.

Im Postsendungs-Datenspeicher Ps-Db wird für jede Postsendung an einem registrierten Empfänger jeweils ein Datensatz Ds angelegt. Dieser Datensatz Ds umfasst
- eine eindeutige Kennung für die Postsendung,
- nach der Entzifferung der Empfänger-Kennzeichnung eine Codierung des registrierten Empfängers dieser Postsendung,
- mindestens ein rechnerverfügbares Abbild von einer Oberfläche der Postendung und
- nach dem Erhalt einer Antwort-Nachricht für diese Postsendung eine Codierung für die Handlung, die gemäß einer Vorgabe des Empfängers mit dieser Postsendung durch zu führen ist.

Jeder Datensatz Ds in der Postsendungs-Datenbank Ps-Db wird im Laufe des Verfahrens um weitere Informationen ergänzt.

Der physikalische Zwischenspeicher für Postsendungen umfasst im Ausführungsbeispiel ein Regallager RL und mehrere Behälter Beh.1, .... Das Regallager RL umfasst mehrere Stellplätze für jeweils einen Behälter. Jeder Behälter Beh.1, ... vermag mehrere Postsendungen aufzunehmen und ist mit einer eindeutigen Behälter-Kennung versehen, welche diesen Behälter von allen anderen Behältern des Zwischenspeichers unterscheidet. Vorzugsweise besitzt jeder Stellplatz jeweils eine Stellplatz-Kennung. Diese Ausgestaltung erleichtert es, später die Postsendungen im Zwischenspeicher RL wiederzufinden.

Die Nachrichten-Erzeugungs-Einrichtung NEE besitzt Lesezugriff auf den Empfänger-Datenspeicher E-Db. Die Nachrichten-Erzeugungs-Einrichtung NEE vermag festzustellen, ob für einen Empfänger ein Datensatz im Empfänger-Datenspeicher E-Db angelegt und abgespeichert ist oder nicht und ob dieser Datensatz eine Nachrichten-Adresse umfasst. Weiterhin vermag die Nachrichten-Erzeugungs-Einrichtung NEE eine Anfrage-Nachricht Anf-N an einen registrierten Empfänger zu erzeugen, wobei die Anfrage-Nachricht Anf-N Informationen über eine Postsendung an diesen Empfänger umfasst. Die Nachrichten-Übermittlungs-Einrichtung NÜE ist dazu ausgestaltet, die Anfrage-Nachricht Anf-N an die oder an eine spezifizierte Nachrichten-Adresse des Empfängers zu übermitteln. Die Nachrichten-Auswerte-Einrichtung NAE vermag eintreffende Antwort-Nachrichten von spezifizierten Empfängern auszuwerten.

Fig. 2 zeigt schematisch die Ausführungs-Sortieranlage Ausf-SAnl und die weiteren Bestandteile, die für jeden Ausführungs-Durchlauf verwendet werden.

In Fig. 2 werden gezeigt:
- eine Zuführ-Einrichtung Ausf-ZE der Ausführungs-Sortieranlage Ausf-SAnl,
- ein Lesegerät Lg der Ausführungs-Sortieranlage Ausf-SAnl, welches ein Strichmuster BC auf einer Postsendung zu entziffern vermag,
- eine Ausschleusungs-Einrichtung Ausf-Aus der Ausführungs-Sortieranlage Ausf-SAnl,
- eine Steuerungseinheit Ausf-SE der Ausführungs-Sortieranlage Ausf-SAnl,
- einen Zeitpunkte-Datenspeicher Zp-Ds,
- einen Zwischenspeicher-Sortierausgang ZwSp-Aus für den Zwischenspeicher RL,
- zwei manuelle Bearbeitungsplätze Bpl.1, Bpl.2, in denen Postsendungen manuell bearbeitet werden,
- zwei Bearbeitungsplatz-Sortierausgänge Bpl-Aus.1, Bpl-Aus.2 für die beiden manuellen Bearbeitungsplätze Bpl.1, Bpl.2,
- einen Bearbeitungsplatz Bpl.S, in dem Postsendungen automatisch vernichtet werden ("shredder"),
- einen Bearbeitungsplatz-Sortierausgang Bpl-Aus.S für den automatischen Bearbeitungsplatz Bpl.S ("shredder"),
- das Regallager RL und
- acht Behälter Beh.1, ..., Beh.8.

Im Zeitpunkte-Datenspeicher Zp-Ds sind Codierungen folgender Zeitpunkte abgespeichert:
Codierungen von n Ausführungs-Zeitpunkten Ausf-T(1), ..., Ausf-T(n),
Codierungen von m Prüfungs-Zeitpunkten Prüf-T(1), ..., Prüf-T(m) und
vorzugsweise eine Codierung des Endes des Aufbewahrungs-Zeitraums Aufb-ZR.

Möglich ist, dass Codierungen absoluter Zeitpunkte abgespeichert werden. Vorzugsweise beziehen sich aber die Zeitpunkte auf einen Referenz-Zeitpunkt, z. B. den Beginn des Registrierungs-Sortierlaufs Reg-Sl. Jeder relative Zeitpunkt legt einen zeitlichen Abstand zu diesem vorgegebenen, aber zeitlich variablen Referenz-Zeitpunkt fest.

Jeder manuelle Bearbeitungsplatz Bpl.1, Bpl.2 für eine Postsendung umfasst im Ausführungsbeispiel jeweils
- eine Datenverarbeitungsanlage mit einer Steuerungseinheit,
- ein Bildschirmgerät,
- eine Vorrichtung zum Öffnen von Postsendungen,
- ein Bildaufnahmegerät in Form eines Scanners,
- eine Kuvertier-Vorrichtung und
- eine Kennzeichnungs-Einrichtung zum Kennzeichnen einer erzeugten Postsendung.

Im Beispiel von Fig. 2 besitzt der manuelle Bearbeitungsplatz Bpl.1 eine Steuerungseinheit Bpl-SE.1 und ein Bildschirmgerät Bpl-Bg.1. Der manuelle Bearbeitungsplatz Bpl.2 besitzt eine Steuerungseinheit Bpl-SE.2 und ein Bildschirmgerät Bpl-Bg.2. Der automatische Bearbeitungsplatz Bpl.S ("shredder") besitzt eine Steuerungseinheit Bpl-SE.S, er benötigt kein Bildschirmgerät.

Beim lösungsgemäßen Verfahren werden für eine bestimmte Menge von Postsendungen drei verschiedene Abfolgen von Verfahrensschritten durchgeführt:
- einmal ein Registrierungs-Sortierlauf,
- jeweils je ein Ausführungs-Sortierlauf pro vorgegebenem Ausführungs-Zeitpunkt und
- bei Bedarf eine Individual-Ausführung, vorzugsweise jeweils einmal pro vorgegebenem Prüfungs-Zeitpunkt.

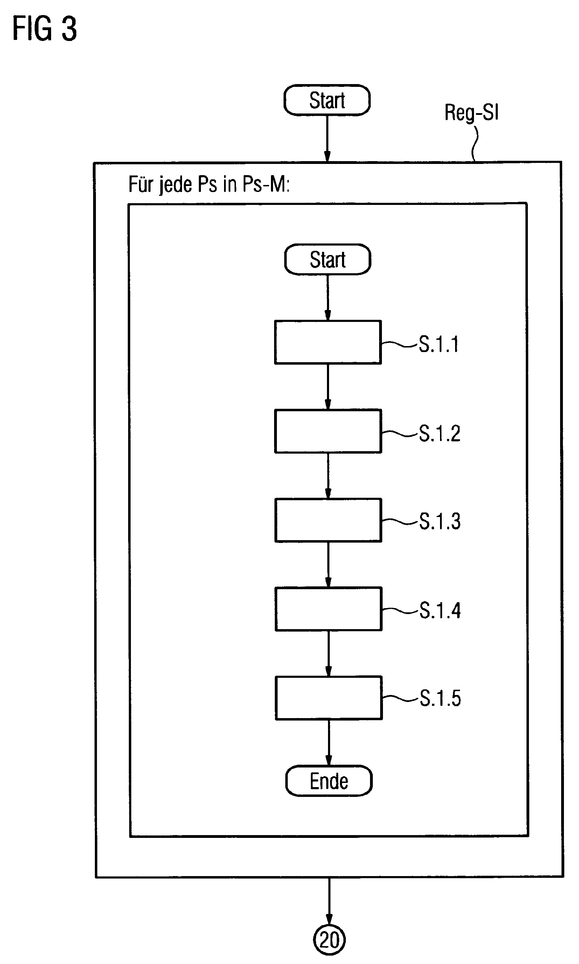

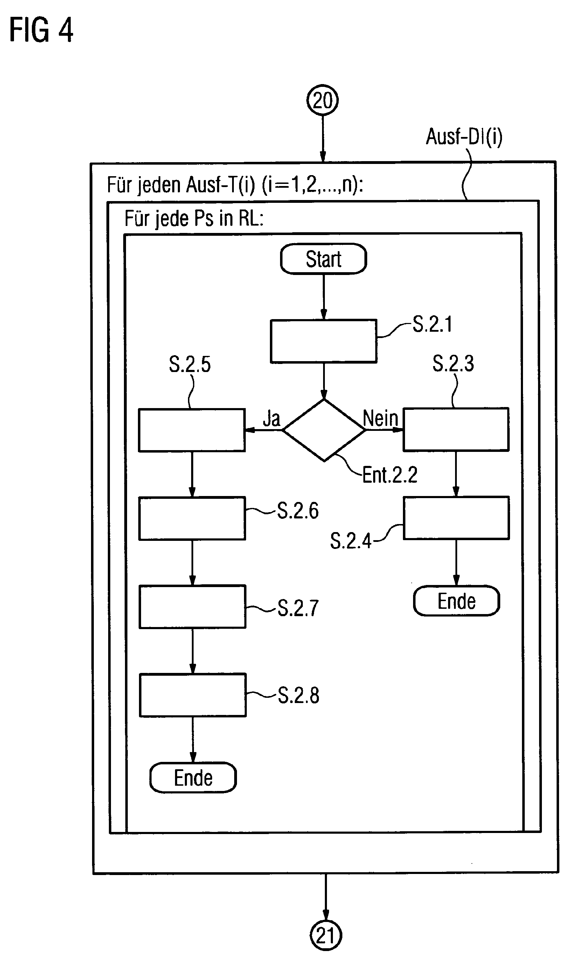

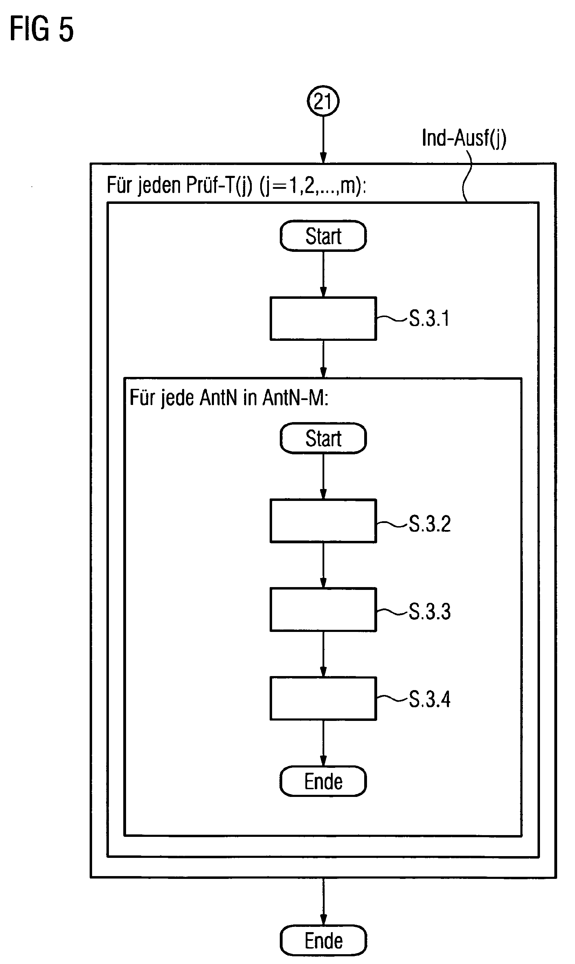

Fig. 3, Fig. 4 und Fig. 5 veranschaulichen mittels eines Flussdiagramms die Schritte, die bei der Verarbeitung der Postsendung durchgeführt werden. Gezeigt werden:
- der Registrierungs-Sortierlauf Reg-Sl (Fig. 3),
- der Ausführungs-Durchlauf Ausf-Dl(i) für den vorgegebenen Ausführungs-Zeitpunkt Ausf-T(i) (i = 1, 2, ..., n) (Fig. 4),
- die Individual-Ausführung Ind-Ausf(j) für den Prüfungs-zeitpunkt Prüf-T(j) (j = 1, 2, ..., m) (Fig. 5).

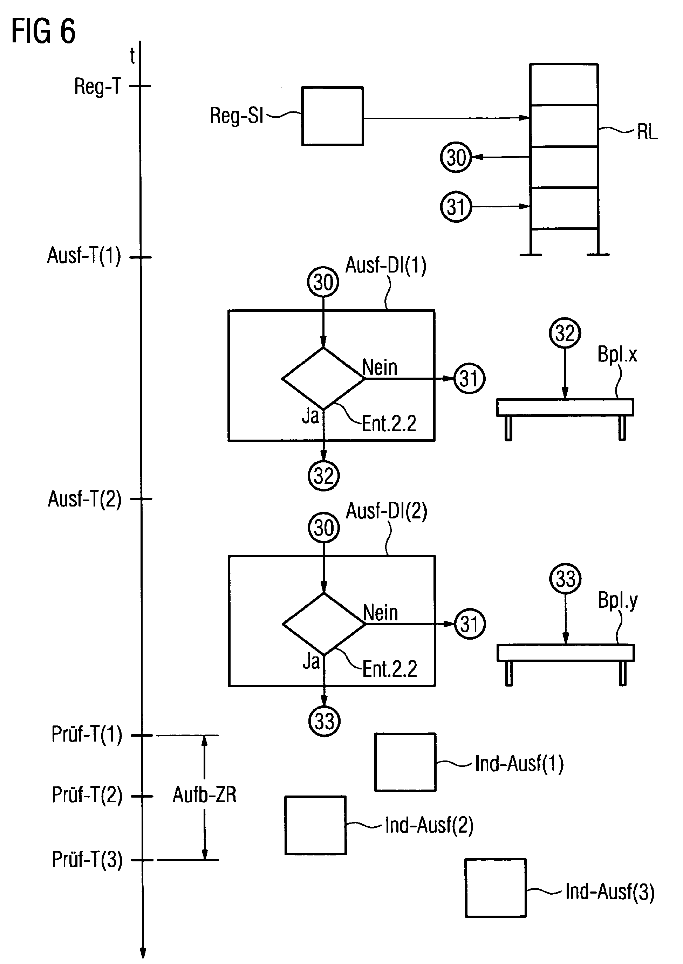

Fig. 6 veranschaulicht die Schritte von Fig. 3, Fig. 4 und Fig. 5 auf einem Zeitstrahl.

Eine Menge Ps-M von Postsendungen erreicht in einem bestimmten Zeitraum ein Bearbeitungszentrum des Transport-Dienstleisters. Alle Postsendungen dieser Menge Ps-M durchlaufen im Registrierungs-Sortierlauf Reg-Sl einmal die Registrierungs-Sortieranlage Reg-SAnl.

Im Registrierungs-Sortierlauf Reg-Sl werden für jede Postsendung der Menge Ps-M an einen registrierten Empfänger die folgenden Schritte durchgeführt:
Das Bildaufnahmegerät Ka.1, Ka.2 des Lesegeräts erzeugt ein rechnerverfügbares Abbild Abb.1, Abb.2 von derjenigen Oberfläche der Postsendung, welche die Empfänger-Kennzeichnung zeigt. Die Bildauswerteeinheit Bae wertet dieses mindestens eine Abbild Abb.1, Abb.2 aus und entziffert die Empfänger-Kennzeichnung auf der Oberfläche der Postsendung.

Die Registrierungs-Sortieranlage Reg-SAnl prüft, ob diese Empfänger-Kennzeichnung einen registrierten Empfänger kennzeichnet, also einen Empfänger, für den im Empfänger-Datenspeicher E-Db ein Datensatz angelegt und abgespeichert ist. In einer Ausführungsform prüft das Lesegerät der Sortieranlage, ob die Empfänger-Kennzeichnung eine bestimmte Form hat, z. B. den Namen und die Adresse eines bestimmten Dienstleister und eine Empfänger-Kennung aufweist. In einer anderen Ausführungsform vergleicht das Lesegerät die entzifferten Empfänger-Kennzeichnungen mit Empfänger-Kennzeichnungen in Datensätzen des Empfänger-Datenspeichers E-Db und entscheidet bei einer Übereinstimmung, dass diese Postsendung für einen registrierten Empfänger bestimmt ist.

Die Registrierungs-Sortieranlage Reg-SAnl erzeugt eine eindeutige Kennung BC für die Postsendung. Diese eindeutige Kennung BC unterscheidet diese Postsendung von jeder anderen Postsendung an einen registrierten Empfänger, die in einer bestimmten Zeitspanne die Registrierungs-Sortieranlage Reg-SAnl durchläuft. Diese eindeutige Kennung BC braucht die Postsendung nicht notwendigerweise von anderen Postsendungen an nicht registrierte Empfänger zu unterscheiden.

Die Registrierungs-Sortieranlage Reg-SAnl ermittelt die interne Kennung für den registrierten Empfänger, wofür die Registrierungs-Sortieranlage Reg-SAnl die entzifferte Empfänger-Kennzeichnung auf der Postsendung auswertet und die Datensätze im Empfänger-Datenspeicher E-Db mit dieser Empfänger-Kennzeichnung vergleicht.

Die Registrierungs-Sortieranlage Reg-SAnl erzeugt einen Datensatz Ds für die Postsendung. Dieser Datensatz Ds umfasst die erzeugte eindeutige Kennung BC für die Postsendung sowie die ermittelte interne Kennung des Empfängers dieser Postsendung. Dieser Datensatz Ds wird in dem Postsendungs-Datenspeicher Ps-Db abgespeichert.

Die Registrierungs-Sortieranlage Reg-SAnl ergänzt den Datensatz Ds für die Postsendung um das rechnerverfügbare Abbild Abb.1 von derjenigen Oberfläche der Postsendung, welches die Empfänger-Kennzeichnung zeigt.

In einer Ausgestaltung versucht die Bildauswerteeinheit Bae der Registrierungs-Sortieranlage Reg-SAnl zusätzlich, den Absender zu ermitteln, der die Postsendung an den registrierten Empfänger versandt hat. Beispielsweise ermittelt die Bildauswerteeinheit Bae im Abbild Abb.1 von der Postsendungs-Oberfläche das Abbild eines Logos eines Absenders und durchsucht eine Datenbank mit den Logos von und weiteren Angaben zu möglichen Absendern. Oder die Bildauswerteeinheit Bae entziffert textliche Angaben zum Absender im Abbild Abb.1. Die Registrierungs-Sortieranlage Reg-SAnl ergänzt den Datensatz für die Postsendung um eine Kennzeichnung des Absenders der Postsendung.

Die Registrierungs-Sortieranlage Reg-SAnl steuert den Drucker Dru oder einen Etikettierer der Registrierungs-Sortieranlage Reg-SAnl an. Dieser Drucker Dru oder Etikettierer versieht die Postsendung mit einer maschinell lesbaren Codierung BC der eindeutigen Kennung der Postsendung. Beispielsweise druckt ein Drucker Dru ein Strichmuster BC ("bar code") auf ein Etikett ("label"), und der Etikettierer bringt dieses bedruckte Etikett auf der Postsendung an.

Die Registrierungs-Sortieranlage Reg-SAnl wählt abhängig von einem vorgegebenen Sortiermerkmal eine Sortierendstelle Ses.1, ..., Ses.4 aus. Das Sortiermerkmal ist z. B.
- die Codierung der eindeutigen Kennung,
- die Empfänger-Kennzeichnung auf der Postsendung,
- der Zeitpunkt, an dem die Postsendung in der Verarbeitungsanlage eingetroffen ist, oder
- eine physikalische Eigenschaft der Postsendung, z. B. ihr Gewicht oder eine Abmessung.

Die Registrierungs-Sortieranlage Reg-SAnl schleust die Postsendung in die ausgewählte Sortierendstelle Ses.1, ..., Ses.4 aus. Von dieser Sortierendstelle Ses.1, ..., Ses.4 wird die Postsendung in den Zwischenspeicher RL transportiert. Beispielsweise wird ein Stapel mit Postsendungen an registrierten Empfängern aus der Sortierendstelle Ses.1, ..., Ses.4 in einen Behälter Beh.10, ..., Beh.13 verbracht, und der gefüllte Behälter Beh.10, ..., Beh.13 wird zum Regallager RL transportiert und auf einen Stellplatz des Regallagers RL gestellt. Dieses Regallager RL fungiert als Zwischenspeicher.

In einer Ausgestaltung erleichtert das Sortiermerkmal es, die Postsendungen im Zwischenspeicher RL zu finden. Dann wird als Sortiermerkmal die aufgedruckte Codierung der Postsendungs-Kennung oder die Empfänger-Kennzeichnung verwendet.

In einer anderen Ausgestaltung werden unterschiedliche Behälter für verschiedene Arten von Postsendungen verwendet. Als Sortiermerkmal wird dann vorzugsweise eine physikalische Eigenschaft verwendet.

In einer einfacheren Ausgestaltung wird kein Sortiermerkmal verwendet. Die Postsendungen werden so auf die Sortierendstellen Ses.1, ..., Ses.4 verteilt, dass sich die Postsendungen rasch aus den Sortierendstellen Ses.1, ..., Ses.4 in den Zwischenspeicher RL verbringen lassen und ein vorgegebener Maximal-Füllstand jeder Sortierendstelle Ses.1, ..., Ses.4 nicht überschritten wird.

In einer besonders einfachen Ausgestaltung werden nur zwei Sortierendstellen verwendet. Die Registrierungs-Sortieranlage Reg-SAnl schleust Postsendungen in die erste Sortierendstelle aus, bis diese erste Sortierendstelle gefüllt ist. Dann schleust die Registrierungs-Sortieranlage Reg-SAnl Postsendungen in die zweite Sortierendstelle aus, bis auch diese gefüllt ist. In der Zwischenzeit wird die erste Sortierendstelle entleert. Nachdem die zweite Sortierendstelle gefüllt ist, wird diese entleert, und die Postsendungen werden wieder in die erste Sortierendstelle ausgeschleust und so fort.

In einer Ausgestaltung besitzt die Registrierungs-Sortieranlage Reg-SAnl eine Waage Waa. Diese Waage Waa wiegt jede Postsendung an einen registrierten Empfänger. Der Datensatz Ds für die registrierte Postsendung wird um eine Kennzeichnung des gemessenen Gewichts ergänzt. Die Information über das gemessene Gewicht erleichtert es dem registrierten Empfänger zu entscheiden, was mit der Postsendung geschehen soll.

Die Registrierungs-Sortieranlage Reg-SAnl ruft die Nachrichten-Erzeugungs-Einrichtung NEE auf, damit die Nachrichten-Erzeugungs-Einrichtung NEE eine Anfrage-Nachricht Anf-N für diese Postsendung erzeugt.

Die Nachrichten-Erzeugungs-Einrichtung NEE erzeugt eine Anfrage-Nachricht Anf-N an den registrierten Empfänger der Postsendung und für diese Postsendung. Die Anfrage-Nachricht Anf-N umfasst
- die eindeutige Kennung BC, mit der die Postsendung versehen wurde,
- das rechnerverfügbare Abbild Abb.1 von der Oberfläche und
- in einer Ausführungsform weitere Informationen über die Postsendung.

Zu diesen weiteren Informationen können folgende Daten gehören:
- das Gewicht der Postsendung, welches von der Waage Waa gemessen wurde,
- der Zeitpunkt, an den das rechnerverfügbare Abbild Abb.1 von der Oberfläche der Postsendung erzeugt wurde und/oder
- der Zeitpunkt, an den die Abfrage-Nachricht Anf-N erzeugt wurde, und
- eine Kennzeichnung des Absenders der Postendung.

Die Nachrichten-Erzeugungs-Einrichtung NEE ermittelt im Empfänger-Datenspeicher E-Db den Datensatz für den registrierten Empfänger dieser Postsendung. In diesem Datensatz ist mindestens eine Nachrichten-Adresse dieses Empfängers abgespeichert. Falls mehrere Nachrichten-Adressen für denselben Empfänger hinterlegt sind, so wendet die Nachrichten-Erzeugungs-Einrichtung NEE eine abgespeicherte Auswahlregel an, um eine Nachrichten-Adresse auszuwählen und dadurch zu ermitteln.

Die Nachrichten-Übermittlungs-Einrichtung NÜE löst die Übermittlung der Anfrage-Nachricht Anf-N an diese Nachrichten-Adresse aus. Beispielsweise versendet die Nachrichten-Übermittlungs-Einrichtung NÜE die Anfrage-Nachricht als E-Mail an die abgespeicherte Nachrichten-Adresse. Oder die Nachrichten-Übermittlungs-Einrichtung NÜE versendet eine Benachrichtigung an die Nachrichten-Adresse. Ein Empfänger autorisiert sich z. B. mit Passwort und/oder elektronischer Signatur und hat dann via Internet Zugriff auf die Abfrage-Nachricht. Möglich ist auch, dass die Nachrichten-Übermittlungs-Einrichtung eine Benachrichtigungs-Postsendung z. B. in Form einer Postkarte erzeugt. Diese Benachrichtigungs-Postsendung wird in eine hinterlegte Postadresse des registrierten Empfängers gesandt.

Sobald diese Schritte für jede Postsendung der Menge Ps-M durchgeführt worden sind, ist der Registrierungs-Sortierlauf Reg-Sl abgeschlossen.

Fig. 3 veranschaulicht den Registrierungs-Sortierlauf Reg-Sl. Hierbei bedeuten
- S.1.1 den Schritt, dass das Lesegerät Ka.1, Ka.2, Bae die Empfänger-Kennzeichnung auf der Postsendung Ps entziffert,
- S.1.2 den Schritt, dass der Datensatz für den Empfänger dieser Postsendung Ps in dem Empfänger-Datenspeicher E-Db ermittelt wird und anschließend in diesem ermittelten Datensatz die Nachrichten-Adresse DVA.1, DVA.2 für diesen Empfänger ermittelt wird,
- S.1.3 den Schritt, dass die Nachrichten-Erzeugungs-Einrichtung NEE die Anfrage-Nachricht Anf-N für die Postsendung Ps erzeugt und die Nachrichten-Übermittlungs-Einrichtung NÜE die Übermittlung dieser Anfrage-Nachricht Anf-N an die ermittelte Nachrichten-Adresse auslöst,
- S.1.4 den Schritt, dass die Registrierungs-Sortieranlage Reg-SAnl für die Postsendung Ps eine Sortierendstelle Ses.1, ..., Ses.4 auswählt und die Postsendung Ps in die ausgewählte Sortierendstelle Ses.1, ..., Ses.4 ausschleust,
- S.1.5 den Schritt, dass die Postsendung Ps aus der ausgewählten Sortierendstelle Ses.1, ..., Ses.4 entnommen wird und in einen Behälter Beh.10, ..., Beh.13 verbracht wird und der gefüllte Behälter Beh.10, ..., Beh.13 zum Zwischenspeicher RL verbracht wird und in den Zwischenspeicher RL gestellt wird.

Die Anfrage-Nachricht Anf-N umfasst vorzugsweise darüber hinaus mehrere mögliche Handlungen, die mit der Postsendung vorgenommen werden können. Zu diesen möglichen Handlungen gehören:
- Die Postsendung wird unverändert an eine tatsächliche Zustelladresse des Empfängers zugesandt ("deliver").
- Die Postsendung wird geöffnet, und jeweils mindestens ein Abbild von den Inhalts-Objekten werden erzeugt und an den Empfänger übermittelt ("open and scan").
- Die Postsendung wird archiviert, bis der Empfänger eine neue Entscheidung übermittelt hat oder bis eine vorgegebene Zeitspanne abgelaufen ist ("store").
- Die Postsendung wird so vernichtet, dass eine missbräuchliche Wiederherstellung des Inhalts ausgeschlossen ist ("safe recycling").

Die Anfrage-Nachricht Anf-N wird so wie oben beschrieben an eine Datenverarbeitungsanlage DVA.1, DVA.2 übermittelt, welche durch die Nachrichten-Adresse spezifiziert ist. Diese Datenverarbeitungsanlage DVA.1, DVA.2 ist z. B. ein ortsfester Rechner oder ein tragbares datenverarbeitendes Gerät desjenigen Empfängers, der auf der Postsendung spezifiziert ist.

Die Nachrichten-Auswerte-Einrichtung NAE wertet eingehende Antwort-Nachrichten Ant-N aus. Die Antwort-Nachrichten treffen in zufälliger und nicht vorhersehbarer Reihenfolge bei der Nachrichten-Auswerte-Einrichtung NAE ein. Jede Antwort-Nachricht Ant-N stammt von einer Datenverarbeitungsanlage DVA.1, DVA.2 eines registrierten Empfängers und umfasst folgende Bestandteile:
- die interne Kennung der Postsendung, auf welche sich die Antwort-Nachricht Ant-N bezieht, und
- eine Spezifikation der Handlung, die gemäß der Antwort-Nachricht Ant-N mit dieser Postsendung vorzunehmen ist.

Möglich ist, dass sich eine einzige Antwort-Nachricht Ant-N auf mehrere Postsendungen bezieht und für jede dieser Postsendungen jeweils eine Handlung spezifiziert. Diese Handlung kann stets die gleiche sein oder von Postsendung zu Postsendung variieren.

Sowohl die Anfrage-Nachricht Anf-N als auch die Antwort-Nachricht Ant-N werden gegen Verfälschungen und Manipulationen sowie gegen unerlaubten Zugriff eines Dritten gesichert, z. B. per Verschlüsselung und/oder mittels elektronischer Signatur.

In einer Ausgestaltung spezifiziert jede Anfrage-Nachricht Anf-N die möglichen Handlungen. Die Anfrage-Nachricht Anf-N wird auf einem Bildschirmgerät der Datenverarbeitungsanlage DVA.1, DVA.2 des Empfängers dargestellt. Der Empfänger wählt per Mausklick eine mögliche Handlung aus. Dieser Vorgang löst die Schritte aus, dass eine Antwort-Nachricht Ant-N erzeugt und an die Nachrichten-Auswerte-Einrichtung NAE übermittelt wird.

Die Nachrichten-Auswerte-Einrichtung NAE wertet jede eintreffende Antwort-Nachricht Ant-N aus und ermittelt die eindeutige Kennung derjenigen Postsendung, auf die sich diese Antwort-Nachricht Ant-N bezieht, sowie die spezifizierte Handlung. Die Nachrichten-Auswerte-Einrichtung NAE ermittelt den Datensatz Ds für diese Postsendung in dem Postsendungs-Datenspeicher Ps-Db und ergänzt diesen Datensatz Ds um die Handlung, die in der Antwort-Nachricht Ant-N spezifiziert ist.

In einer Ausgestaltung werden an einem Bearbeitungsplatz mehrere mögliche Handlungen an unterschiedliche Postsendungen durchgeführt. In einer anderen Ausgestaltung ist für jeweils eine mögliche Handlung mindestens ein spezialisierter Bearbeitungsplatz Bpl.1, Bpl.2, Bpl.S vorgesehen.

Im Ausführungsbeispiel sind n Ausführungs-Zeitpunkte Ausf-T(1), ..., Ausf-T(n) vorgegeben. Für jeden Ausführungs-Zeitpunkt Ausf-T(i) wird jeweils ein Ausführungs-Durchlauf Ausf-Dl(i) durch die Ausführungs-Sortieranlage durchgeführt. Die Anzahl n ist größer oder gleich 2. Beispielsweise ist n = 4. Der Ausführungs-Durchlauf Ausf-Dl(i) beginnt zum Ausführungs-Zeitpunkt Ausf-T(i) oder innerhalb eines zeitlichen Toleranzbereichs um diesen Ausführungs-Zeitpunkt Ausf-T(i). Der erste Schritt des Ausführungs-Durchlaufs Ausf-Dl(i) beginnt also im Toleranzbereich um den Ausführungs-Zeitpunkt Ausf-T(i).

Der erste Ausführungs-Zeitpunkt Ausf-T(1) liegt im Ausführungsbeispiel am ersten Tag nach der Anlieferung der Menge Ps-M von Postsendungen an das Bearbeitungszentrum des Transport-Dienstleisters. Der zweite Ausführungs-Zeitpunkt Ausf-T(2) liegt am zweiten Tag nach der Anlieferung, der dritte Ausführungs-Zeitpunkt Ausf-T(3) im fünften oder sechsten Tag und der vierte Ausführungs-Zeitpunkt am zwanzigsten oder einundzwanzigsten Tag nach der Auslieferung.

Fig. 2 zeigt schematisch die Ausführungs-Sortieranlage Ausf-SAnl und die weiteren Bestandteile, die für jeden Ausführungs-Durchlauf verwendet werden. In jedem Ausführungs-Durchlauf werden die nachfolgend beschriebenen Schritte durchgeführt. Hierfür wird die Ausführungs-Sortieranlage Ausf-SAnl verwendet, die folgende Bestandteile hat:
- die Zuführ-Einrichtung Ausf-ZE ("feeder") der Ausführungs-Sortieranlage Ausf-SAnl mit einem Vereinzeler Ausf-Ver ("singulator"),
- ein Lesegerät Lg für maschinenlesbare Kennungen von Postsendungen, z. B. ein Strichmuster-Leser ("bar code scanner"), und
- mindestens zwei Sortierausgänge, nämlich mindestens einen Zwischenspeicher-Sortierausgang und mindestens einen Bearbeitungsplatz-Sortierausgang.

Diese Ausführungs-Sortieranlage Ausf-SAnl kann dieselbe sein wie die Registrierungs-Sortieranlage Reg-SAnl, die im Registrierungs-Sortierlauf verwendet wurde, oder eine andere, einfacher aufgebaute Sortieranlage.

In einer Ausgestaltung besitzt diese Ausführungs-Sortieranlage Reg-SAnl jeweils einen Bearbeitungsplatz-Sortierausgang für jede mögliche Handlung, die mit einer Postsendung vorgenommen werden kann. In dieser Ausführungsform gibt es auch für jede mögliche Handlung jeweils mindestens einen Bearbeitungsplatz. Dies ermöglicht es, die Postsendung von einem Bearbeitungsplatz-Sortierausgang direkt an den zugeordneten Bearbeitungsplatz zu transportieren.

Alle Postsendungen, die sich noch im Zwischenspeicher RL befinden, werden aus dem Zwischenspeicher RL entnommen und der Zuführ-Einrichtung Ausf-ZE der Ausführungs-Sortieranlage Ausf-SAnl zugeführt. Damit beginnt ein Ausführungs-Durchlauf.

Der Vereinzeler Ausf-Ver vereinzelt die Postsendungen. Anschließend werden für jede Postsendung, die aus dem Zwischenspeicher RL entnommen und der Ausführungs-Sortieranlage Ausf-SAnl zugeführt wurde, folgende Schritte durchgeführt:
Die Postsendung wird an dem Lesegerät Lg für Kennungen vorbei transportiert. Das Lesegerät Lg entziffert die maschinenlesbare Kennung BC auf der Postendung. Beispielsweise hat die aufgedruckte Kennung die Form eines Strichmusters ("bar code"), und das Lesegerät umfasst einen Strichmuster-Leser ("bar code scanner"), der das Strichmuster abtastet und entziffert.

Die Ausführungs-Sortieranlage Ausf-SAnl ermittelt im Postsendungs-Datenspeicher Ps-Db den Datensatz Ds für diese Postsendung, das ist der Datensatz mit der entzifferten Kennung.

Die Ausführungs-Sortieranlage Ausf-SAnl stellt fest, ob der ermittelte Datensatz Ds nunmehr eine Spezifikation einer Handlung, die mit der Postsendung vorgenommen werden soll, umfasst oder nicht.

Falls der ermittelte Datensatz Ds eine Spezifikation für eine solche Handlung umfasst, so wird die Postsendung in einen Bearbeitungsplatz-Sortierausgang ausgeschleust. Beispielsweise wird die Postsendung in denjenigen Bearbeitungs-Sortierausgang ausgeschleust, der für die spezifizierte Handlung vorgesehen ist. Von dort wird die Postsendung zu einem Bearbeitungsplatz transportiert, z. B. zu dem Bearbeitungsplatz, der für die spezifizierte Handlung ausgestaltet ist.

Ansonsten wird die Postsendung in einen Zwischenspeicher-Sortierausgang ausgeschleust. Von dort wird die Postsendung zurück in den Zwischenspeicher RL transportiert, vorzugsweise mit einem Behälter und zusammen mit vielen anderen Postsendungen in diesem Behälter.

Im Beispiel der Fig. 2 schleust die Ausführungs-Sortieranlage Ausf-SAnl jede Postsendung, die wieder in den Zwischenspeicher RL gelangen soll, in den Zwischenspeicher-Sortierausgang ZwSp-Aus aus. Die Ausführungs-Sortieranlage Ausf-SAnl schleust jede Postsendung, die zum manuellen Bearbeitungsplatz Bpl.1 gelangen soll, in den Bearbeitungsplatz-Sortierausgang Bpl-Aus.1 aus. Die Ausführungs-Sortieranlage Ausf-SAnl schleust jede Postsendung, die zum manuellen Bearbeitungsplatz Bpl.2 gelangen soll, in den Bearbeitungsplatz-Sortierausgang Bpl-Aus.2 aus. Die Ausführungs-Sortieranlage Ausf-SAnl schleust jede Postsendung, die zum automatischen Bearbeitungsplatz Bpl.S ("shredder") gelangen soll, in den Bearbeitungsplatz-Sortierausgang Bpl-Aus.S aus. Die Ausführungs-Sortieranlage Ausf-SAnl verteilt also Postsendungen auf die beiden manuellen Bearbeitungsplätze Bpl.1, Bpl.2.

Die Postsendungen im Zwischenspeicher-Sortierausgang ZwSp-Aus werden im Behälter Beh.5 zum Zwischenspeicher RL transportiert. Die Postsendungen im Zwischenspeicher-Sortierausgang Bpl-Aus.1 werden im Behälter Beh.6 zum manuellen Bearbeitungsplatz Bpl.1 transportiert. Die Postsendungen im Bearbeitungsplatz-Sortierausgang Bpl-Aus.2 werden im Behälter Beh.7 zum manuellen Bearbeitungsplatz Bpl.2 transportiert. Die Postsendungen im Bearbeitungsplatz-Sortierausgang Bpl-Aus.S werden im Behälter Beh.8 zum automatischen Bearbeitungsplatz Bpl.S transportiert.

Nach dem Ausführungs-Durchlauf sind zu jedem Bearbeitungsplatz jeweils mehrere Postsendungen transportiert worden. Hierfür wird jeweils ein Transportmittel verwendet, z. B. mindestens ein Behälter. Die Ausführungs-Sortieranlage Ausf-SAnl hat außerdem für jeden Bearbeitungsplatz jeweils mindestens einen Bearbeitungs-Auftrag Bpl-Auf erzeugt. Dieser Bearbeitungs-Auftrag Bpl-Auf umfasst einen Ausführungs-Datensatz für jede Postsendung, die an dem Bearbeitungsplatz transportiert wurde.

Dieser Ausführungs-Datensatz umfasst folgende Informationen über die Postsendung:
- die eindeutige Kennung BC, welche auf die Postsendung aufgebracht worden ist,
- eine Spezifikation der Handlung, welche mit der Postsendung vorzunehmen ist,
- vorzugsweise das Abbild Abb.1 von der Oberfläche der Postsendung und
- vorzugsweise eine Kennzeichnung der Position der Postsendung im Transportmittel.

Fig. 4 veranschaulicht den Ausführungs-Durchlauf Ausf-Dl(i) für den Ausführungs-Zeitpunkt Ausf-T(i) (i = 1, 2, ..., n). Hierbei bedeuten
- S.2.1 den Schritt, dass das Lesegerät Lg der Ausführungs-Sortieranlage Ausf-SAnl die Postsendungs-Kennzeichnung BC auf der Postsendung Ps liest und entziffert,
- Ent.2.2 die von der Steuerungseinheit Ausf-SE durchgeführte Entscheidung, ob für die Postsendung Ps eine Antwort-Nachricht Ant-N vorliegt oder nicht,
- S.2.3 den Schritt, dass die Ausführungs-Sortieranlage Ausf-SAnl die Postsendung Ps in den Zwischenspeicher-Sortierausgang ZwSp-Aus ausschleust,
- S.2.4 den Schritt, dass die Postsendung Ps zusammen mit anderen Postsendungen aus dem Zwischenspeicher-Sortierausgang ZwSp-Aus entnommen wird und in den Behälter Beh.5 verbracht wird und der gefüllte Behälter Beh.5 in den Zwischenspeicher RL verbracht wird,
- S.2.5 den Schritt, dass die Ausführungs-Sortieranlage Ausf-SAnl für die Postsendung Ps und für diejenige Handlung, die in der Antwort-Nachricht Ant-N spezifiziert ist, einen Sortierausgang Bpl-Aus.1, Bpl-Aus.2, Bpl-Aus.S auswählt, der dem passenden Bearbeitungsplatz Bpl.1, Bpl.2, Bpl.S zugeordnet ist,
- S.2.6 den Schritt, dass die Ausführungs-Sortieranlage Ausf-SAnl die Postsendung in den ausgewählten Sortierausgang Bpl-Aus.1, Bpl-Aus.2, Bpl-Aus.S ausschleust,
- S.2.7 den Schritt, dass die Postsendung Ps mitsamt anderen Postsendungen aus dem ausgewählten Sortierausgang Bpl-Aus.1, Bpl-Aus.2, Bpl-Aus.S entnommen wird und in einem Behälter Beh.6, Beh.7, Beh.8 verbracht wird und der gefüllte Behälter Beh.6, Beh.7, Beh.8 zum passenden Bearbeitungsplatz Bpl.1, Bpl.2, Bpl.S transportiert wird,
- S.2.8 den Schritt, dass am passenden Bearbeitungsplatz Bpl.1, Bpl.2, Bpl.S mit der Postsendung Ps die spezifizierte Handlung vorgenommen wird.

Möglich ist auch, dass die Postsendung aus einem Sortierausgang Bpl-Aus.1, Bpl-Aus.2, Bpl-Aus.S mittels einer Fördereinrichtung, z. B. einer Abfolge von Endlos-Förderbändern, zum jeweiligen Bearbeitungsplatz Bpl.1, Bpl.2, Bpl.S verbracht wird. Eine solche Fördereinrichtung kann auch die Postsendungen aus dem Zwischenspeicher-Sortierausgang ZwSp-Aus zum Zwischenspeicher RL transportieren.

Jeder manuelle Bearbeitungsplatz Bpl.1, Bpl.2 umfasst bevorzugt ein ortsfestes Bildschirmgerät Bpl-Bg.1, Bpl-Bg.2. Auf dem Bildschirmgerät Bpl-Bg.1, Bpl-Bg.2 wird der Bearbeitungs-Auftrag Bpl-Auf für den Bearbeitungsplatz Bpl.1, Bpl.2 dargestellt. Beispielsweise wird jeweils ein Ausführungs-Datensatz für eine Postsendung dargestellt. Ein Bearbeiter sucht die spezifizierte Postsendung im Transportmittel, entnimmt die Postsendung aus dem Transportmittel und führt die spezifizierte Handlung durch. Möglich ist auch, dass ein Handhabungsautomat das Entnehmen und/oder die Handlungen vornimmt. Möglich ist auch, dass die Postsendung in einer Haltevorrichtung zum manuellen Bearbeitungsplatz transportiert wird.

Falls die Postsendung ungeöffnet an eine tatsächliche Zustelladresse gesandt werden soll, so wird in einer Ausgestaltung die Postsendung in einen bislang leeren Umschlag gesteckt. Dieser Umschlag wird mit einer Kennzeichnung der tatsächlichen Zustelladresse versehen und der gewöhnlichen Sortierung unterzogen. Vorzugsweise wird dieser bislang leere Umschlag ebenfalls mit einer eindeutigen Kennung versehen, und der Datensatz Ds für die Postsendung wird mit dieser zusätzlichen eindeutigen Kennung ergänzt. Eine Sortieranlage löst bei der gewöhnlichen Sortierung den Transport der Postendung im neuen Umschlag an die tatsächliche Zustelladresse des Empfängers aus.

In einer anderen Ausführungsform wird eine Empfänger-Kennzeichnung, die spezifisch für den registrierten Empfänger ist, mit einem Etikett überklebt, welches die tatsächliche Zustelladresse kennzeichnet. Die Postsendung mit dem Etikett wird ebenfalls der normalen Sortierung unterzogen.

Falls die Postsendung archiviert oder vernichtet werden soll, so wird die spezifizierte Handlung durchgeführt. Bei spezifizierter Vernichtung wird die Postendung zum Beispiel physikalisch vernichtet.

Falls der Empfänger die Handlung "open and scan" spezifiziert hat, so werden folgende Schritte durchgeführt:
- Mittels der Vorrichtung zum Öffnen wird die Postsendung geöffnet.
- Die Inhalts-Objekte werden aus der geöffneten Postsendung entnommen.
- Der Scanner am manuellen Bearbeitungsplatz erzeugt mindestens jeweils ein Abbild von jedem Inhalts-Objekt in der geöffneten Postendung.
- Ist das Inhalts-Objekt ein Blatt, so wird jeweils ein Abbild von jeder Seite des Blatts erzeugt.
- Der Datensatz Ds für diese Postsendung in dem Postsendungs-Datenspeicher Ps-Db wird um die Abbilder von den Inhalts-Objekten ergänzt.
- Das Verpackungselement (im Falle eines Briefs der Umschlag) und die Inhalts-Objekte werden in ein neues Verpackungselement verbracht.
- Eine neue eindeutige Kennung wird erzeugt. Auf das neue Verpackungselement wird diese neue Kennung aufgebracht.
- Der Datensatz Ds für diese Postendung wird um die neue Kennung ergänzt.
- Das neue Verpackungselement wird verschlossen.
- Das verschlossene neue Verpackungselement wird in den Zwischenspeicher RL verbracht.
- Die Nachrichten-Erzeugungs-Einrichtung NAE erzeugt eine zweite Anfrage-Nachricht. Diese zweite Anfrage-Nachricht umfasst die (erste) eindeutige Kennung der Postsendung und die Abbilder der Inhalts-Objekte.
- Die Nachrichten-Übermittlungs-Einrichtung NÜE übermittelt diese zweite Anfrage-Nachricht an eine Nachricht-Adresse des registrierten Empfängers, genauso wie dies bei der ersten Anfrage-Nachricht Anf-N geschah.

Damit sind die Schritte abgeschlossen, die durchzuführen sind, wenn der Empfänger die Handlung "open and scan" spezifiziert hat. Die Nachrichten-Auswerte-Einrichtung NAE prüft, ob eine zweite Antwort-Nachricht für diese Postsendung eingegangen ist oder nicht.

Eine zweite Antwort-Nachricht auf diese zweite Anfrage-Nachricht spezifiziert eine der folgenden möglichen Handlungen:
- die Postsendung im neuen Verpackungselement an die tatsächliche Zustelladresse zustellen oder
- die Postsendung archivieren oder
- die Postsendung nunmehr vernichten.

Die Option "open and scan" ist jetzt nicht mehr sinnvoll und wird nicht angeboten.

Die oben beschriebenen Schritte werden in jedem Ausführungs-Durchlauf Ausf-Dl (1), ..., Ausf-Dl(n) durchgeführt. Nach dem letzten Ausführungs-Durchlauf Ausf-Dl(n) sind diejenigen Postsendungen wieder in den Zwischenspeicher RL zurück transportiert worden, für die bis zum letzten Ausführungs-Zeitpunkt Ausf-T(n) keine Antwort-Nachricht Ant-N an die Nachrichten-Auswerte-Einrichtung NAE übermittelt wurde. Außerdem befinden sich diejenigen Postsendungen im Zwischenspeicher RL, für welche die Antwort-Nachricht "open and scan" spezifiziert hat und für die bis zum letzten Ausführungs-Zeitpunkt Ausf-T(n) keine zweite Antwort-Nachricht die Nachrichten-Auswerte-Einrichtung NAE erreichte.

Vorzugsweise ermittelt die Ausführungs-Sortieranlage Ausf-SAnl im letzten Ausführungs-Durchlauf Ausf-Dl(n) zusätzlich, in welcher Reihenfolge sie Postsendungen in den Zwischenspeicher-Sortierausgang ZwSp-Aus ausgeschleust hat. Die Kennung desjenigen Behälters oder die Kennungen derjenigen Behälter, in der diese Postsendung verbracht worden ist, werden ebenfalls ermittelt. Der Datensatz Ds für die Postsendung wird um die Kennung des Behälters und um eine kennzeichnende Position, an den diese Postsendung sich im Behälter befindet, ergänzt. Vorzugsweise wird der Datensatz ebenfalls um eine Kennung des Stellplatzes, auf den dieser Behälter gestellt worden ist, ergänzt. Dies erleichtert es, während des Aufbewahrungs-Zeitraums Aufb-ZR die Postsendungen im Zwischenspeicher RL wiederzufinden.

Vorgegeben ist ein Aufbewahrungs-Zeitraum Aufb-ZR für die Postsendungen, die sich nach dem letzten Ausführungs-Durchlauf noch im Zwischenspeicher RL befinden. Nach dem Ende des Aufbewahrungs-Zeitraums Aufb-ZR werden alle Postsendungen der Postsendungs-Menge Ps-M aus dem Zwischenspeicher RL entnommen.

In einer bevorzugten Ausführungsform wird ein Abschluss-Durchlauf durchgeführt. Hierbei werden folgende Schritte für jede Postsendung aus dem Zwischenspeicher RL durchgeführt:
- Die eindeutige Kennung auf der Postsendung wird entziffert.
- Der Datensatz für diese Postsendung wird ermittelt.
- Falls der Datensatz für diese Postsendung eine Standard-Handlung festlegt, so wird diese Standard-Handlung mit der Postsendung ausgeführt. Diese Standard-Handlung gilt nur für den Fall, dass keine Antwort-Nachricht Ant-N für die

Postsendung eine spezielle Handlung festlegt.
- Ansonsten wird eine vorgegebene Universal-Handlung durchgeführt. Zum Beispiel wird die Postsendung sicher vernichtet.

In einer Ausführungsform wird innerhalb des Aufbewahrungs-Zeitraums Aufb-ZR bei Bedarf eine Individual-Ausführung mit mindestens einer einzelnen Postsendung aus dem Zwischenspeicher durchgeführt. Eine Individual-Ausführung wird in einer Ausführungsform dadurch ausgelöst, dass nach dem letzten Ausführungs-Durchlauf Ausf-Dl(n) eine Antwort-Nachricht an die Nachrichten-Auswerte-Einrichtung NAE übermittelt wurde und sich diese Antwort-Nachricht Ant-N auf eine Postsendung bezieht, die nach dem letzten Ausführungs-Durchlauf Ausf-Dl(n) noch im Zwischenspeicher RL ist. Die Nachrichten-Auswerte-Einrichtung NAE wertet die Antwort-Nachricht Ant-N aus und ermittelt die eindeutige Kennung in dieser Antwort-Nachricht sowie die Handlung, in der eine Antwort-Nachricht Ant-N spezifiziert wird.

In einer anderen Ausführungsform werden m aufeinanderfolgende Prüfungs-Zeitpunkte Prüf-T (1), ..., Prüf-T(m) vorgegeben, die alle im Aufbewahrungs-Zeitrum Aufb-ZR liegen. Beispielsweise beginnt der Aufbewahrungs-Zeitraum Aufb-ZR mit dem ersten Prüfungs-Zeitpunkt Prüf-T(1) und endet mit dem letzten Prüfungs-Zeitpunkt Prüf-T(m). An jedem Prüfungs-Zeitpunkt Prüf-T(j) wird ermittelt, welche Antwort-Nachrichten seit dem vorhergehenden Prüfungs-Zeitpunkt Prüf-T(j-1) eingegangen sind (j = 2, 3, ..., m). Am ersten Prüfungs-Zeitpunkt Prüf-T(1) wird ermittelt, welche Antwort-Nachrichten seit dem letzten Ausführungs-Zeitpunkt Ausf-T(n) eingegangen sind.

Für jede Antwort-Nachricht Ant-N, die innerhalb des Aufbewahrungs-Zeitraums Aufb-ZR eintrifft, und für diejenige Postsendung Ps, die in dieser Antwort-Nachricht Ant-N spezifiziert ist, werden folgende Schritte durchgeführt:
- Die Postsendung Ps wird im Zwischenspeicher RL gesucht. Hierfür werden die Kennung des Behälters und die Kennzeichnung der Position im Behälter sowie in einer Ausführungsform die Kennung des Stellplatzes des Behälters verwendet, um die Postsendung Ps zu suchen.
- Wird die Postsendung, die in der Antwort-Nachricht Ant-N benannt ist, im Zwischenspeicher RL gefunden, so wird die gefundene Postsendung dem Zwischenspeicher RL entnommen. Alle anderen Postsendungen verbleiben im Zwischenspeicher RL.
- Die spezifizierte Handlung wird mit der entnommenen Postsendung Ps vorgenommen. Fig. 5 zeigt eine Individual-Ausführung Ind-Ausf(j) für den Prüfungs-Zeitpunkt Prüf-T(j). In Fig. 5 bedeuten
- S.3.1 den Schritt, dass die Nachrichten-Auswerte-Einrichtung NAE alle Antwort-Nachrichten auswertet, die nach dem vorhergehenden Prüfungs-Zeitpunkt Prüf-T(j-1) (j>1) bzw. nach dem letzten Ausführungs-Zeitpunkt Ausf-T(n) (j=1) eingetroffen sind und sich daher auf jeweils auf eine Postsendung beziehen, die sich noch im Zwischenspeicher RL befindet,
- S.3.2 den Schritt, dass für eine Antwort-Nachricht Ant-N ermittelt wird, auf welche Postsendung Ps sich diese Antwort-Nachricht Ant-N bezieht, und dass diese Postsendung Ps im Zwischenspeicher RL gesucht wird und dem Zwischenspeicher RL entnommen wird, und
- S.3.3 den Schritt, dass diejenige Handlung ermittelt wird, die in der Antwort-Nachricht Ant-N spezifiziert ist, und die Postsendung Ps zu einem passenden Bearbeitungsplatz transportiert wird.

Fig. 6 zeigt beispielhaft die Schritte von Fig. 3, Fig. 4 und Fig. 5 auf einem Zeitstrahl. Hierbei ist n = 2. Am ersten Ausführungs-Zeitpunkt Ausf-T(1) wird ein erster Ausführungs-Durchlauf Ausf-Dl(1) durchgeführt, am zweiten und zugleich letzten Ausführungs-Zeitpunkt Ausf-T(2) ein zweiter Ausführungs-Durchlauf Ausf-Dl(2). An den m = 3 vorgegebenen Prüfungs-Zeitpunkten Prüf-T (1), Prüf-T(2), Prüf-T(3) werden die drei Individual-Ausführungen Ind-Ausf(1), Ind-Ausf(2) und Ind-Ausf(3) durchgeführt.

In der bislang beschriebenen Ausführungsform werden die Ausführungs-Durchläufe Ausf-Dl (1), ..., Ausf-Dl(n) vor dem Aufbewahrungs-Zeitraum Aufb-ZR durchgeführt. In einer anderen Ausführungsform werden die Ausführungs-Durchläufe Ausf-Dl(1), ..., Ausf-Dl(n) nach dem Aufbewahrungs-Zeitraum Aufb-ZR durchgeführt. Diese Ausgestaltung ist insbesondere dann sinnvoll, wenn die Gefahr besteht, dass ein Ausführungs-Durchlauf einen Gegenstand, hier also eine Postsendung, bestätigen könnte. Die Anfrage-Nachricht Anf-N für einen Gegenstand benennt vorzugsweise zusätzlich den ersten Ausführungs-Zeitpunkt Ausf-T(1) und beschreibt daher, wann der erste Ausführungs-Durchlauf Ausf-Dl(1) beginnt. Oder die Anfrage-Nachricht benennt einen anderen letztmöglichen Zeitpunkt, bis zu dem eine Antwort-Nachricht vorliegen muss, damit der Gegenstand noch vor dem ersten Ausführungs-Durchlauf Ausf-Dl(1) behandelt werden kann und keinem Ausführungs-Durchlauf unterzogen wird. Es liegt am Empfänger der Anfrage-Nachricht Anf-N, die Antwort-Nachricht Ant-N für diesen Gegenstand so früh abzuschicken, dass die Antwort-Nachricht Ant-N rechtzeitig vor dem ersten Ausführungs-Durchlauf Ausf-Dl(1) eintrifft, so dass der Gegenstand noch durch eine Individual-Ausführung und/oder einen Ausführungs-Durchlauf behandelt wird. Möglich ist auch, bereits beim Registrierungs-Sortierlauf Reg-Sl automatisch zu prüfen, ob ein Gegenstand durch einen Ausführungs-Durchlauf beschädigt werden könnte, und falls ja, einen entsprechenden Hinweis in die Anfrage-Nachricht einzufügen.

In einer Fortbildung dieser Ausgestaltung werden zwei Aufbewahrungs-Zeiträume vorgegeben. Ein erster Aufbewahrungs-Zeitraum liegt vor dem Ausführungs-Zeitpunkt Ausf-T (1), ..., Ausf-T(n). Ein zweiter Aufbewahrungs-Zeitraum liegt nach dem letzten Ausführungs-Zeitpunkt Ausf-T(n). Möglich ist auch, zunächst einen Ausführungs-Durchlauf Ausf-Dl(1) durchzuführen, dann die Gegenstände während eines ersten Aufbewahrungs-Zeitraums im Zwischenspeicher zu belassen und nur aufgrund einer Individual-Ausführung einen Gegenstand zu entnehmen, dann mindestens einen weiteren Ausführungs-Durchlauf Ausf-Dl(2) durchzuführen und dann die noch verbleibenden Gegenstände während eines zweiten Aufbewahrungs-Zeitraums im Zwischenspeicher zu belassen.

### Bezugszeichenliste

| *Bezugszeichen* | *Bedeutung* |
|---|---|
| Abb.1, Abb.2 | rechnerverfügbare Abbilder von den beiden Oberflächen einer Postsendung, werden erzeugt von den Kameras Ka.1, Ka.2 im Registrierungs-Sortierlauf Reg-Sl |
| Anf-N | Anfrage-Nachricht |
| Ant-N | Antwort-Nachricht |
| Aufb-ZR | vorgegebener Aufbewahrungs-Zeitraum |
| Ausf-Dl(i) | Ausführungs-Durchlauf für den Ausführungs-Zeitpunkt Ausf-T(i)(i = 1, 2, ...) |
| Ausf-SAnl | Ausführungs-Sortieranlage |
| Ausf-Aus | Ausschleusungs-Einrichtung der Ausführungs-Sortieranlage Ausf-SAnl |
| Ausf-SE | Steuerungseinheit der Ausführungs-Sortieranlage Ausf-SAnl |
| Ausf-T(i) | Ausführungs-Zeitpunkt Nr. i (i = 1, 2, ..., n) |
| Ausf-Ver | Vereinzeler ("singulator") der Zuführ-Einrich-tung Ausf-ZE der Ausführungs-Sortieranlage Ausf-SAnl |
| Ausf-2E | Zuführ-Einrichtung der Ausführungs-Sortieranlage Ausf-SAnl |
| Bae | Bildauswerteeinheit der Registrierungs-Sortieranlage Reg-SAnl |
| BC | Postsendungs-Kennung in Form eines Barcodes |
| Beh.1, ..., Beh.4 | Behälter, in denen Postsendungen in einem Aus-führungs-Durchlauf Ausf-Dl(i) vom Regallager RL zur Ausführungs-Sortieranlage Ausf-SAnl transportiert werden |
| Beh.5, ..., Beh.8 | Behälter, in denen Postsendungen in einem Aus-führungs-Durchlauf Ausf-Dl(i) von der Ausfüh-rungs-Sortieranlage Ausf-SAnl entweder zurück in das Regallager RL oder zu einem Bearbei-tungsplatz Bpl.1, Bpl.2, Bpl.S transportiert werden |
| Beh.10, ..., Beh.13 Bpl.1, Bpl.2 | Behälter, in denen Postsendungen im Registrie-rungs-Sortierlauf Reg-Sl von der Registrie-rungs-Sortieranlage Reg-SAnl in das Regallager RL transportiert werden manuelle Bearbeitungsplätze |
| Bpl.S | Bearbeitungsplatz zum automatischen Vernichten von Postsendungen ("shredder") |
| Bpl-Auf | Bearbeitungs-Auftrag für einen Bearbeitungs-platz Bpl.1, Bpl.2, Bpl.S |
| Bpl-Aus. 1, Bpl-Aus.2 | Bearbeitungsplatz-Sortierausgänge der Ausfüh-rungs-Sortieranlage Ausf-SAnl für Postsendun-gen zu einem manuellen Bearbeitungsplatz Bpl.1, Bpl.2 |
| Bpl-Aus.S | Bearbeitungsplatz-Sortierausgang der Ausfüh-rungs-Sortieranlage Ausf-SAnl für Postsendun-gen zu dem Bearbeitungsplatz Bpl.S |
| Bpl-Bg.1 | Bildschirmgerät des manuellen Bearbeitungs-platzes Bpl.1 |
| Bpl-Bg.2 | Bildschirmgerät des manuellen Bearbeitungs-platzes Bpl.2 |
| Bpl-SE.1 | Steuerungseinheit des manuellen Bearbeitungs-platzes Bpl.1 |
| Bpl-SE.2 | Steuerungseinheit des manuellen Bearbeitungs-platzes Bpl.2 |
| Bpl-SE.S | Steuerungseinheit des automatischen Bearbei-tungsplatzes Bpl.S |
| Dru | Drucker der Registrierungs-Sortieranlage Reg-SAnl |
| Ds | Datensatz für eine Postsendung, wird im Postsendungs-Datenspeicher Ps-Db abgespeichert |
| DVA.1, DVA.2 | Datenverarbeitungsanlagen von registrierten Empfängern |
| E-Db | Empfänger-Datenspeicher mit Datensätzen für die registrierten Empfänger |
| Ent.2.2 | Entscheidung: liegt eine Antwort-Nachricht für die Postsendung Ps vor oder nicht? |
| Ind-Ausf (j) | Individual-Ausführung für den Prüfungs-zeitpunkt Prüf-T(j) (j = 1, 2, ..., m) |
| Ka.1, Ka.2 | Kameras der Registrierungs-Sortieranlage Reg-SAnl |
| Lg | Lesegerät der Ausführungs-Sortieranlage Ausf-SAnl |
| m | Anzahl der Prüfungs-Zeitpunkte Prüf-T (1), ..., Prüf-T(m) im Aufbewahrungs-Zeitraum Aufb-ZR |
| n | Anzahl der Ausführungs-Zeitpunkte Ausf-T(1), ..., Ausf-T(n) |
| NAE | Nachrichten-Auswerte-Einrichtung |
| NEE | Nachrichten-Erzeugungs-Einrichtung |
| NÜE | Nachrichten-Übermittlungs-Einrichtung |
| Prüf-T(j) | Prüfungs-Zeitpunkt im Aufbewahrungs-Zeitraum Aufb-ZR (j = 1, ..., m) |
| Ps-Db | Postsendungs-Datenspeicher mit Datensätzen für diejenigen Postsendungen, die im Registrie-rungs-Sortierlauf Reg-Sl registriert wurden |
| Ps-M | Menge der Postsendungen, die in einem bestimm-ten Zeitraum im Bearbeitungszentrum eintreffen |
| Reg-Aus | Ausschleusungs-Einrichtung der Registrierungs-Sortieranlage Reg-SAnl |
| Reg-SAnl | Registrierungs-Sortieranlage |
| Reg-Aus | Ausschleusungs-Einrichtung der Registrierungs-Sortieranlage Reg-SAnl |
| Reg-SE | Steuerungseinheit der Registrierungs-Sortieranlage Reg-SAnl |
| Reg-Sl | Registrierungs-Sortierlauf |
| Reg-Ver | Vereinzeler der Zuführ-Einrichtung Reg-ZE der Registrierungs-Sortieranlage Reg-SAnl |
| Reg-ZE | Zuführ-Einrichtung der Registrierungs-Sortieranlage Reg-SAnl |
| RL | Regallager, fungiert als Zwischenspeicher |
| S.1.1 | Schritt: entziffere die Empfänger-Kennzeichnung auf der Postsendung Ps |
| S.1.2 | Schritt: Suche den Datensatz für den Empfänger in dem Empfänger-Datenspeicher E-Db |
| S.1.3 | Schritt: erzeuge und übermittle Anfrage-Nachricht Ant-N für die Postsendung Ps an die ermittelte Nachrichten-Adresse |
| S.1.4 | Schritt: wähle für die Postsendung Ps eine Sortierendstelle Ses.1, ..., Ses.4 aus und schleuse Postsendung Ps in die ausgewählte Sortierendstelle aus |
| S.1.5 | Schritt: verbringe die Postsendung Ps aus der ausgewählten Sortierendstelle in den Zwischen-speicher RL |
| S.2.1 | Schritt: entziffere die Postsendungs-Kennung BC der Postsendung Ps |
| S.2.3 | Schritt: schleuse die Postsendung Ps in den Zwischenspeicher-Sortierausgang ZwSp-Aus aus |
| S.2.4 | Schritt: verbringe die Postsendung Ps aus dem Zwischenspeicher-Sortierausgang ZwSp-Aus in den Zwischenspeicher RL |
| S.2.5 | Schritt: wähle einen Bearbeitungsplatz-Sortierausgang Bpl-Aus.1, Bpl-Aus.2, Bpl-Aus.S aus |
| S.2.6 | Schritt: schleuse die Postsendung Ps in den ausgewählten Bearbeitungsplatz-Sortierausgang aus |
| S.2.7 | Schritt: transportiere die Postsendung Ps zum passenden Bearbeitungsplatz Bpl.1, Bpl.2, Bpl.S |
| S.3.1 | Schritt: werte alle neu eingetroffenen Ant-wort-Nachrichten aus |
| S.3.2 | Schritt: suche diejenige Postsendung Ps, auf die sich die Antwort-Nachricht Ant-N bezieht, im Zwischenspeicher RL und entnehme diese Postsendung Ps aus dem Zwischenspeicher RL |
| S.3.3 | Schritt: ermittle die Handlung, die für die Postsendung Ps in der Antwort-Nachricht Ant-N spezifiziert ist, und transportiere die Post-sendung Ps zu einem passenden Bearbeitungs-platz |
| S.3.4 | Schritt: löse die Durchführung der spezifi-zierten Handlung aus |
| Ses.1, Ses.2, ... | Sortierendstellen der Registrierungs-Sortieranlage Reg-SAnl |
| Waa | Waage der Registrierungs-Sortieranlage Reg-SAnl |
| Zp-Ds | Zeitpunkte-Datenspeicher |
| ZwSp | Zwischenspeicher in Form eines Regallagers RL |
| ZwSp-Aus | Zwischenspeicher-Sortierausgang der Ausfüh-rungs-Sortieranlage Ausf-SAnl |

## Patentansprüche

1. Verfahren zum Verarbeiten von mehreren Gegenständen, wobei
jeder Gegenstand mit jeweils einer Kennzeichnung versehen ist,
eine Abfolge mit einem Ausführungs-Zeitpunkt oder mehreren aufeinander folgenden Ausführungs-Zeitpunkten (Ausf-T(1), ..., Ausf-T(n)) vorgegeben wird,
mindestens ein maximaler Aufbewahrungs-Zeitraum (Aufb-ZR) vorgegeben wird,
wobei
alle zu verarbeitenden Gegenstände in einem Registrierungs-Sortierlauf (Reg-Sl) eine Registrierungs-Sortieranlage (Reg-SAnl) durchlaufen,
im Registrierungs-Sortierlauf (Reg-Sl) für jeden zu verarbeitenden Gegenstand die Schritte durchgeführt wird, dass
- die Registrierungs-Sortieranlage (Reg-SAnl) die Kennzeichnung auf dem Gegenstand entziffert oder auf andere Weise ermittelt,
- eine Anfrage-Nachricht (Anf-N) erzeugt wird, wobei die Anfrage-Nachricht (Anf-N) mindestens eine Information über den Gegenstand umfasst,
- eine Nachrichten-Adresse (DVA.1, DVA.2) in Abhängigkeit von den ermittelten Gegenstands-Kennzeichnungen ermittelt wird,
- die Anfrage-Nachricht (Anf-N) an die ermittelte Nachrichten-Adresse (DVA.1, DVA.2) übermittelt wird,
- die Registrierungs-Sortieranlage (Reg-SAnl) den Gegenstand ausschleust und
- der Gegenstand in einen Zwischenspeicher (RL) verbracht wird,
an jedem Ausführungs-Zeitpunkt (Ausf-T(i)) der Vorgang ausgelöst wird, dass alle Gegenstände, die sich zum Ausführungs-Zeitpunkt (Ausf-T(i)) im Zwischenspeicher (RL) befinden,
- dem Zwischenspeicher (RL) entnommen werden und
- in einem Ausführungs-Durchlauf (Ausf-D1(i)) eine Ausführungs-Sortieranlage (Ausf-SAnl) durchlaufen,
die Ausführungs-Sortieranlage (Ausf-SAnl) bei diesem Ausführungs-Durchlauf (Ausf-D1(i)) jeden Gegenstand, dessen Entnahme aus dem Zwischenspeicher (RL) an diesem Ausführungs-Zeitpunkt (Ausf-T(i)) ausgelöst wurde und der die Ausführungs-Sortieranlage (Ausf-SAnl) durchläuft, identifiziert und
in jedem Ausführungs-Durchlauf (Ausf-D1(i)) für jeden identifizierten Gegenstand die Schritte durchgeführt werden, dass
- geprüft wird, ob für diesen Gegenstand eine Antwort-Nachricht (Ant-N) eingetroffen ist oder nicht,
- wobei als Antwort-Nachricht (Ant-N) für den Gegenstand eine eintreffende Nachricht verwendet wird, die sich auf diesen Gegenstand bezieht und eine Handlung spezifiziert, die mit diesem Gegenstand durchzuführen ist,
- dann, wenn das Vorliegen einer Antwort-Nachricht (Ant-N) für diesen Gegenstand festgestellt wird, die Schritte ausgelöst werden,
- dass der Gegenstand zu einer Bearbeitungsanlage (Bpl.1, Bpl.2, Bpl.S) transportiert wird und
- an dieser Bearbeitungsanlage (Bpl.1, Bpl.2, Bpl.S) mit dem Gegenstand die Handlung, die in der Antwort-Nachricht (Ant-N) spezifiziert ist, durchgeführt wird, und
- ansonsten die Ausführungs-Sortieranlage (Ausf-SAnl) den Gegenstand ausschleust und der Gegenstand wieder in den Zwischenspeicher (RL) verbracht wird, und
dann, wenn im Aufbewahrungs-Zeitraum (Aufb-ZR) eine Antwort-Nachricht (Ant-N) eintrifft, die sich auf einen Gegenstand im Zwischenspeicher (RL) bezieht und eine Handlung, die mit diesem Gegenstand durchzuführen ist, spezifiziert,
- der Gegenstand aus dem Zwischenspeicher (RL) entnommen wird und
- die Durchführung der in der Antwort-Nachricht (Ant-N) spezifizierten Handlung ausgelöst wird.

2. Verfahren nach Anspruch 1,
**dadurch gekennzeichnet, dass**
- jeder vorgegebener Ausführungs-Zeitpunkt (Ausf-T(i)) zeitlich vor dem Aufbewahrungs-Zeitraum (Aufb-ZR) liegt und
- jeder Ausführungs-Durchlauf (Ausf-D1(i)) vor dem Aufbewahrungs-Zeitraum (Aufb-ZR) durchgeführt wird.

3. Verfahren nach Anspruch 1,
**dadurch gekennzeichnet, dass**
- jeder Ausführungs-Durchlauf (Ausf-D1(i)) nach dem Aufbewahrungs-Zeitraum (Aufb-ZR) durchgeführt wird und
- mindestens eine Anfrage-Nachricht (Anf-N) für einen Gegenstand eine Kennzeichnung des ersten Ausführungs-Zeitpunkts (Ausf-T(1)) umfasst.

4. Verfahren nach einem der Ansprüche 1 bis 3,
**dadurch gekennzeichnet, dass**
bei Vorliegen einer Antwort-Nachricht (Ant-N) für einen Gegenstand mindestens eine der folgenden in der Antwort-Nachricht (Ant-N) spezifizierten Handlungen ausgelöst wird:
- der Gegenstand wird an einen Zielpunkt transportiert, der durch die ermittelte Gegenstands-Kennzeichnung auf dem Gegenstand festgelegt ist,
- der Gegenstand wird vernichtet,
- eine weitere Information über den Gegenstand wird erzeugt und als eine weitere Anfrage-Nachricht an einen weiteren Nachrichten-Adresse übermittelt,
- wobei die weitere Nachrichten-Adresse in der Antwort-Nachricht für diesen Gegenstand spezifiziert ist oder gleich der ermittelten Nachrichten-Adresse ist.

5. Verfahren nach Anspruch 4,
**dadurch gekennzeichnet, dass**
jeder Gegenstand
- ein Verpackungselement und
- mindestens ein Inhalt-Objekt
umfasst,
jedes Inhalt-Objekt eines Gegenstands sich vor Beginn der Verarbeitung im Verpackungselement befindet und
der Schritt, als Reaktion auf eine Antwort-Nachricht (Ant-N) die weitere Information über den Gegenstand zu erzeugen, die Schritte umfasst, dass
- jedes Inhalts-Objekt aus dem Verpackungselement entnommen wird,
- jeweils mindestens ein rechnerverfügbares Abbild von jedem entnommenen Inhalts-Objekt erzeugt wird,
- jedes Inhalts-Objekt in ein weiteres Verpackungselement verbracht wird, so dass sich nach dem Verbringen alle Inhalts-Objekte in mindestens einem weiteren Verpackungselement befinden,
- jedes dergestalt gefüllte weitere Verpackungselement wieder in den Zwischenspeicher (RL) verbracht wird und
- das jeweils mindestens eine Abbild pro Inhalts-Objekt als Bestandteil der weiteren Anfrage-Nachricht an die weitere Nachrichten-Adresse übermittelt wird.

6. Verfahren nach einem der Ansprüche 1 bis 5,
**dadurch gekennzeichnet, dass**
die Ausführungs-Sortieranlage (Ausf-SAnl) in einem Ausführungs-Durchlauf (Ausf-D1(i)) einen Gegenstand
- dann in einen Bearbeitungs-Sortierausgang (Bpl-Aus.1, Bpl-Aus.2, Bpl-Aus.S) der Ausführungs-Sortieranlage (Ausf-SAnl) ausschleust, wenn eine Antwort-Nachricht (Ant-N) für den Gegenstand eingetroffen ist, und
- den Gegenstand ansonsten in einen Zwischenspeicher-Sortierausgang (ZwSp-Aus) der Ausführungs-Sortieranlage (Ausf-SAnl) ausschleust,
alle Gegenstände aus dem Zwischenspeicher-Sortierausgang (ZwSp-Aus) in den Zwischenspeicher (RL) verbracht werden und
alle Gegenstände aus jedem Bearbeitungs-Sortierausgang (Bpl-Aus.1, Bpl-Aus.2, Bpl-Aus.S) zu jeweils einer Bearbeitungsanlage (Bpl.1, Bpl.2, Bpl.S) transportiert werden, wo die spezifizierten Handlungen vorgenommen werden.

7. Verfahren nach einem der Ansprüche 1 bis 6,
**dadurch gekennzeichnet, dass**
mindestens ein Prüfungs-Zeitpunkt (Prüf-T(1), ..., Prüf-T(m)) vorgegeben wird,
wobei jeder vorgegebene Prüfungs-Zeitpunkt (Prüf-T(1), ..., Prüf-T(m)) im Aufbewahrungs-Zeitraum (Aufb-ZR) liegt,
an jedem Prüfungs-Zeitpunkt (Prüf-T(1), ..., Prüf-T(m)) die Durchführung der Schritte ausgelöst wird, dass
- ermittelt wird, welche zu bearbeitenden Antwort-Nachrichten eingetroffen sind,
- wobei eine zu bearbeitende Antwort-Nachricht (Ant-N) eine solche Antwort-Nachricht ist, die
- nach dem letzten Ausführungs-Zeitpunkt (Ausf-T(n)) eingetroffen ist und
- sich auf einen Gegenstand bezieht, der sich noch im Zwischenspeicher (RL) befindet, und
für jede zu bearbeitende Antwort-Nachricht (Ant-N) die Schritte durchgeführt werden, dass
- der Gegenstand, auf dem sich diese Antwort-Nachricht (Ant-N) bezieht, aus dem Zwischenspeicher (RL) entnommen wird und
- die Durchführung der in der Antwort-Nachricht (Ant-N) spezifizierten Handlungen ausgelöst wird.

8. Verfahren nach einem der Ansprüche 1 bis 7,
**dadurch gekennzeichnet, dass**
mehrere Zwischenspeicher verwendet werden,
nach dem Ausführungs-Durchlauf (Ausf-D1(i)) für einen Ausführungs-Zeitpunkt (Ausf-T(i))
ein solcher Zwischenspeicher ausgewählt wird,
der alle Gegenstände aufzunehmen vermag, die
- im Ausführungs-Durchlauf die Ausführungs-Sortieranlage (Ausf-SAnl) durchlaufen haben und
- für die die Prüfung ergibt, dass keine Antwort-Nachricht (Ant-N) vorliegt, und
diese Gegenstände in den ausgewählten Zwischenspeicher verbracht werden.

9. Verfahren nach einem der Ansprüche 1 bis 8,
**dadurch gekennzeichnet, dass**
mindestens drei Ausführungs-Zeitpunkte (Ausf-T(1), Ausf-T(2), Ausf-T(3)) dergestalt vorgegeben werden,
dass
- der zeitliche Abstand zwischen dem ersten Ausführungs-Zeitpunkt (Ausf-T(1)) und dem zweiten Ausführungs-Zeitpunkt (Ausf-T(2)) kleiner ist
- als der zeitliche Abstand zwischen dem zweiten Ausführungs-Zeitpunkt (Ausf-T(2)) und dem dritten Ausführungs-Zeitpunkt (Ausf-T(3)).

10. Verfahren nach einem der Ansprüche 1 bis 9,
**dadurch gekennzeichnet dass**
mehrere Bearbeitungsanlagen (Bpl.1, Bpl.2, Bpl.S) verwendet werden,
die Ausführungs-Sortieranlage (Ausf-SAnl) mehrere Sortierausgänge (Bpl-Aus.1, Bpl-Aus.2, Bpl-Aus.S) aufweist, die jeweils einer Bearbeitungsanlage (Bpl.1, Bpl.2, Bpl.S) zugeordnet sind,
in jedem Ausführungs-Durchlauf (Ausf-D1(j)) dann, wenn für einen Gegenstand eine Antwort-Nachricht (Ant-N), die eine Handlung spezifiziert, eingetroffen ist,
- abhängig von der Handlung eine Bearbeitungsanlage (Bpl.1, Bpl.2, Bpl.S) ausgewählt wird und
- der Gegenstand in denjenigen Sortierausgang (Bpl-Aus.1, Bpl-Aus.2, Bpl-Aus.S) ausgeschleust wird,
- welcher der ausgewählten Bearbeitungsanlage (Bpl.1, Bpl.2, Bpl.S) zugeordnet ist.

11. Vorrichtung zum Verarbeiten von mehreren Gegenständen, wobei
jeder Gegenstand mit jeweils einer Kennzeichnung versehen ist,
die Vorrichtung
- einen Zeitpunkte-Datenspeicher (Zp-Ds),
- einen Zwischenspeicher (RL),
- eine Ausführungs-Sortieranlage (Ausf-SAnl),
- eine Registrierungs-Sortieranlage (Reg-SAnl),
- mindestens eine Bearbeitungsanlage (Bpl-Aus.1, Bpl-Aus.2, Bpl-Aus.S),
- eine Nachrichten-Erzeugungs-Einrichtung (NEE),
- eine Nachrichten-Übertragungs-Einrichtung (NÜE) und
- eine Nachrichten-Auswerte-Einrichtung (NAE),
umfasst,
im Zeitpunkte-Datenspeicher (Zp-Ds)
- ein Ausführungs-Zeitpunkt oder
- eine Abfolge von mehreren aufeinander folgenden Ausführungs-Zeitpunkten (Ausf-T(1), ..., Ausf-T(n)) sowie
- ein maximaler Aufbewahrungs-Zeitraum (Aufb-ZR) spezifiziert sind,
die Registrierungs-Sortieranlage (Reg-SAnl) dazu ausgestaltet ist, dass alle Gegenstände die Registrierungs-Sortieranlage (Reg-SAnl) durchlaufen und
die Vorrichtung dazu ausgestaltet ist, für jeden durchlaufenden Gegenstand die Schritte durchzuführen, dass
- die Registrierungs-Sortieranlage (Reg-SAnl) die Kennzeichnung auf dem Gegenstand entziffert oder auf andere Weise ermittelt,
- die Nachrichten-Erzeugungs-Einrichtung (NEE) eine Anfrage-Nachricht (Anf-N) erzeugt, wobei die Anfrage-Nachricht (Anf-N) mindestens eine Information über den Gegenstand umfasst,
- die Nachrichten-Erzeugungs-Einrichtung (NEE) eine Nachrichten-Adresse (DVA.1, DVA.2) in Abhängigkeit von den ermittelten Gegenstands-Kennzeichnungen ermittelt,
- die Nachrichten-Übermittlungs-Einrichtung (NÜE) die Übermittlung der erzeugten Anfrage-Nachricht (Anf-N) an den ermittelten Nachrichten-Adresse (DVA.1, DVA.2) auslöst und
- der Gegenstand in den Zwischenspeicher (RL) verbracht wird,
die Vorrichtung weiterhin dazu ausgestaltet ist, an jedem Ausführungs-Zeitpunkt (Ausf-T(1), ..., Ausf-T(n)) den Vorgang auszulösen, dass
- alle Gegenstände, die sich zum Ausführungs-Zeitpunkt (Ausf-T(i)) im Zwischenspeicher (RL) befinden, den Zwischenspeicher entnommen werden und
- die entnommenen Gegenstände die Ausführungs-Sortieranlage (Ausf-SAnl) in einem Ausführungs-Sortierlauf (Ausf-D1(i)) für diesen Ausführungs-Zeitpunkt (Ausf-T(i)) durchlaufen,
die Ausführungs-Sortieranlage (Ausf-SAnl) weiterhin dazu ausgestaltet ist, bei diesem Ausführungs-Durchlauf (Ausf-Dl(i)) jeden Gegenstand, dessen Entnahme aus dem Zwischenspeicher (RL) an diesem Ausführungs-Zeitpunkt (Ausf-T(i)) ausgelöst wurde und der die Ausführungs-Sortieranlage (Ausf-SAnl) durchläuft, zu identifizieren, die Vorrichtung dazu ausgestaltet ist, in jedem Ausführungs-Durchlauf (Ausf-D1(i)) für jeden identifizierten Gegenstand die Schritte durchzuführen, dass
- die Nachrichten-Auswerte-Einrichtung (NAE) prüft, ob für diesen Gegenstand eine Antwort-Nachricht (Ant-N) eingetroffen ist,
- wobei als Antwort-Nachricht (Ant-N) für den Gegenstand eine eintreffende Nachricht verwendet wird, die sich auf diesen Gegenstand bezieht und eine Handlung spezifiziert, die mit diesem Gegenstand durchzuführen ist,
- dann, wenn die Nachrichten-Auswerte-Einrichtung (NAE) das Vorliegen einer Antwort-Nachricht (Ant-N) für diesen Gegenstand feststellt, die Vorrichtung die Schritte auslöst,
- den Gegenstand zu einer Bearbeitungsanlage (Bpl.1, Bpl.2, Bpl.S) der Vorrichtung zu transportieren und
- mit dem Gegenstand die Handlung, die in der Antwort-Nachricht spezifiziert ist, durchzuführen, und
- ansonsten die Ausführungs-Sortieranlage (Ausf-SAnl) den Gegenstand ausschleust und
- der Gegenstand wieder in den Zwischenspeicher (RL) verbracht wird, und
die Vorrichtung weiterhin dazu ausgestaltet ist, dann, wenn innerhalb des Aufbewahrungs-Zeitraums (Aufb-ZR) eine Antwort-Nachricht (Ant-N) in der Vorrichtung eintrifft, die sich auf einen Gegenstand im Zwischenspeicher (RL) bezieht und eine Handlung spezifiziert,
die Schritte durchzuführen, dass
- der Gegenstand aus dem Zwischenspeicher (RL) entnommen wird,
- die Vorrichtung die Schritte auslöst, den Gegenstand zu einer Bearbeitungsanlage (Bpl-Aus.1, Bpl-Aus.2, Bpl-Aus.S) der Vorrichtung zu transportieren und mit dem Gegenstand die Handlung, die in der Antwort-Nachricht (Ant-N) spezifiziert ist, durchzuführen.

## Claims

1. Method for processing a number of objects, wherein
each object is provided with an identification in each case,
a sequence is predetermined with an execution time or a number of successive execution times (Ausf-T(1), ..., Ausf-T(n)),
at least one maximum storage period (Aufb-ZR) is predetermined,
wherein
all objects to be processed pass through a registration sorting system (Reg-SAnl) in a registration sorting run (Reg-S1),
in the registration sorting run (Reg-S1), the steps are performed for each object to be processed that
- the registration sorting system (Reg-SAnl) deciphers, or determines in another way, the identification on the object,
- an inquiry message (Anf-N) is generated, the inquiry message (Anf-N) comprising at least one information item about the object,
- a message address (DVA.1, DVA.2) is determined in dependence on the object identifications determined,
- the inquiry message (Anf-N) is transmitted to the message address (DVA.1, DVA.2) determined,
- the registration sorting system (Reg-SAnl) delivers the object and
- the object is moved into a temporary store (RL),
at each execution time (Ausf-T(i)), the process is triggered that all objects which are located in the temporary store (RL) at the execution time (Ausf-T(i))
- are taken from the temporary store (RL)
- and passed through an execution sorting system (Ausf-SAnl) in an execution pass (Ausf-D1(i)),
the execution sorting system (Ausf-SAnl), in this execution pass (Ausf-D1(i)) identifies each object, the removal of which from the temporary store (RL) was triggered at this execution time (Ausf-T(i)) and which passes through the execution sorting system (Ausf-SAnl), and
in each execution pass (Ausf-D1(i)) for each identified object, the steps are performed that
- it is checked whether a response message (Ant-N) has arrived for this object or not,
- wherein, as response message (Ant-N) for the object, an incoming message is used which refers to this object and specifies an action which is to be performed with this object,
- when the presence of a response message (Ant-N) for this object is found, the steps are triggered
- that the object is transported to a workstation (Bpl.1, Bpl.2, Bpl.S) and
- at this workstation (Bpl.1, Bpl.2, Bpl.S) the action which is specified in the response message (Ant-N) is performed with the object, and
- otherwise, the execution sorting system (Ausf-SAnl) delivers the object and the object is moved back into the temporary store (RL), and
if a response message (Ant-N), which refers to an object in the temporary store (RL) and specifies an action which is to be performed with this object, arrives in the storage period (Aufb-ZR),
- the object is taken from the temporary store (RL) and
- the performance of the action specified in the response message (Ant-N) is triggered.

2. Method according to Claim 1, **characterized in that**
- each predetermined execution time (Ausf-T(i)) is before the storage period (Aufb-ZR) in time and
- each execution pass (Ausf-D1(i)) is performed before the storage period (Aufb-ZR).

3. Method according to Claim 1, **characterized in that**
- each execution pass (Ausf-D1(i)) is performed after the storage period (Aufb-ZR) and
- at least one inquiry message (Anf-N) for an object comprises an identification of the first execution time (Ausf-T(1)).

4. Method according to one of Claims 1 to 3, **characterized in that**
when a response message (Ant-N) is present for an object, at least one of the following actions specified in the response message (Ant-N) is triggered:
- the object is transported to a destination which is specified by the determined object identification on the object,
- the object is destroyed,
- a further information item about the object is generated and transmitted as a further inquiry message to a further message address,
- wherein the further message address is specified in the response message for this object or is equal to the message address determined.

5. Method according to Claim 4, **characterized in that** each object
- comprises a packaging element and
- at least one content object,
each content object of an object is located in the packaging element before the beginning of processing,
and
the step, as reaction to a response message (Ant-N), to generate the further information about the object, comprises the steps that
- each content object is taken from the packaging element,
- in each case at least one computer-provided image of each content object removed is generated,
- each content object is moved into a further packaging element so that, after the moving, all content objects are located in at least one further packaging element,
- each further packaging element filled in this manner is moved back into the temporary store (RL) and
- the in each case at least one image per content object is transmitted to the further message address as component of the further inquiry message.

6. Method according to one of Claims 1 to 5, **characterized in that**
the execution sorting system (Ausf-SAnl), in an execution pass (Ausf-D1(i)), delivers an object
- into a workstation sorting output (Bpl-Aus.1, Bpl-Aus.2, Bpl-Aus.S) of the execution sorting system (Ausf-SAnl) when a response message (Ant-N) has arrived for the object, and
- otherwise delivers the object into a temporary-store sorting output (ZwSp-Aus) of the execution sorting system (Ausf-SAnl),
all objects are moved out of the temporary-store sorting output (ZwSp-Aus) into the temporary store (RL) and
all objects are transported out of each workstation sorting output (Bpl-Aus.1, Bpl-Aus.2, Bpl-Aus.S) to in each case one workstation (Bpl.1, Bpl.2, Bpl.S) where the actions specified are performed.

7. Method according to one of Claims 1 to 6, **characterized in that** at least one test time (Prüf-T(1), ..., Prüf-T(m)) is predetermined,
wherein each predetermined test time (Prüf-T(1), ..., Prüf-T(m)) is in the storage period (Aufb-ZR),
at each test time (Prüf-T(1), ..., Prüf-T(m)) the performance of the steps is triggered that
- it is determined which response messages to be processed have arrived,
- wherein a response message to be processed (Ant-N) is such a response message which
- has arrived after the last execution time (Ausf-T(n)) and
- refers to an object which is still located in the temporary store (RL), and
for each response message (Ant-N) to be processed, the steps are performed that
- the object, to which this response message (Ant-N) refers, is taken from the temporary store (RL) and
- the performance of the actions specified in the response message (Ant-N) is triggered.

8. Method according to one of Claims 1 to 7, **characterized in that**
a number of temporary stores are used,
after the execution pass (Ausf-D1(i)), for an execution time (Ausf-T(i)),
such a temporary store is selected which can accommodate all objects which
- have passed through the execution sorting system (Ausf-SAnl) in the execution pass and
- for which the test shows that no response message (Ant-N) is present, and
these objects are moved into the selected temporary store.

9. Method according to one of Claims 1 to 8, **characterized in that**
at least three execution times (Ausf-T(1), Ausf-T(2), Ausf-T(3)) are predetermined in such a manner that
- the time interval between the first execution time (Ausf-T(1)) and the second execution time (Ausf-T(2)) is less
- than the time interval between the second execution time (Ausf-T(2)) and the third execution time (Ausf-T(3)).

10. Method according to one of Claims 1 to 9, **characterized in that**
a number of workstations (Bpl.1, Bpl.2, Bpl.S) are used, the execution sorting system (Ausf-SAnl) has a number of sorting outputs (Bpl-Aus.1, Bpl-Aus.2, Bpl-Aus.S) which are in each case allocated to one workstation (Bpl.1, Bpl.2, Bpl.S),
in each execution pass (Ausf-D1(j)), when a response message (Ant-N) which specifies an action has arrived for an object,
- a workstation (Bpl.1, Bpl.2, Bpl.S) is selected in dependence on the action and
- the object is delivered into the sorting output (Bpl-Aus.1, Bpl-Aus.2, Bpl-Aus.S),
- which is allocated to the selected workstation (Bpl.1, Bpl.2, Bpl.S).

11. Device for processing a number of objects,
wherein
each object is provided with an identification in each case,
the device comprises
- a times data memory (Zp-Ds),
- a temporary store (RL),
- an execution sorting system (Ausf-SAnl),
- a registration sorting system (Reg-SAnl),
- at least one workstation (Bpl-Aus.1, Bpl-Aus.2, Bpl-Aus.S),
- a message generation facility (NEE),
- a message transmission facility (NÜE) and
- a message evaluation facility (NAE),
in the times data memory (Zp-Ds),
- an execution time or
- a sequence of a number of successive execution times (Ausf-T(1), ..., Ausf-T(n)) and
- a maximum storage period (Aufb-ZR) are specified,
the registration sorting system (Reg-SAnl) is arranged so that all objects pass through the registration sorting system (Reg-SAnl) and
the device is arranged for performing each object passing through the steps that
- the registration sorting system (Reg-SAnl) deciphers, or determines in another way, the identification on the object,
- the message generation facility (NEE) generates an inquiry message (Anf-N), the inquiry message (Anf-N) comprising at least one information item about the object,
- the message generation facility (NEE) determines a message address (DVA.1, DVA.2) in dependence on the object identifications determined,
- the message transmission facility (NÜE) triggers the transmission of the generated inquiry message (Anf-N) to the message address (DVA.1, DVA.2) determined and
- the object is moved into the temporary store (RL),
the device is also arranged to trigger at each execution time (Ausf-T(1), ..., Ausf-T(n)) the process that
- all objects which are located in the temporary store (RL) at the execution time (Ausf-T(i)) are taken from the temporary store and
- the objects removed pass through the execution sorting system (Ausf-SAnl) in an execution sorting run (Ausf-Dl(i)) for this execution time (Ausf-T(i)),
the execution sorting system (Ausf-SAnl) is also arranged for identifying, in this execution pass (Ausf-D1(i)), each object, the removal of which from the temporary store (RL) was triggered at this execution time (Ausf-T(i)) and which passes through the execution sorting system (Ausf-SAnl),
the device is arranged for performing in each execution pass (Ausf-D1(i)), for each identified object, the steps that
- the message evaluation facility (NAE) checks whether a response message (Ant-N) has arrived for this object,
- wherein an incoming message which refers to this object and specifies an action which is to be performed with this object is used as response message (Ant-N) for the object,
- if the message evaluation facility (NAE) finds that a response message (Ant-N) is present for this object, the device triggers the steps,
- to transport the object to a workstation (Bpl.1, Bpl.2, Bpl.S) of the device and
- to perform with the object the action which is specified in the response message, and
- otherwise, the execution sorting system (Ausf-SAnl) delivers the object and
- the object is moved back into the temporary store (RL), and
the device is also arranged, when a response message (Ant-N) which refers to an object in the temporary store (RL) and specifies an action, arrives in the device within the storage period (Aufb-ZR), to perform the steps that
- the object is taken from the temporary store (RL),
- the device triggers the steps of transporting the object to a workstation (Bpl-Aus.1, Bpl-Aus.2, Bpl-Aus.S) of the device and performing with the object the action which is specified in the response message (Ant-N).

## Revendications

1. Procédé de traitement de plusieurs objets dans lequel
chaque objet est pourvu d'une caractérisation respectivement,
on prescrit une suite ayant un instant d'exécution ou plusieurs instants (Ausf-T(1),..., Ausf-T(n)) d'exécution se suivant les uns les autres,
on prescrit au moins un laps de temps (Aufb-ZR) maximum de conservation,
dans lequel
tous les objets à traiter dans une passe (Reg-S1) de tri d'enregistrement passe dans une installation (Reg-San1) de tri d'enregistrement,
dans la passe (Reg-S1) de tri d'enregistrement, on effectue, pour chaque objet à traiter, les stades dans lesquels
- l'installation (Reg-San1) de tri d'enregistrement déchiffre la caractérisation sur l'objet ou la détermine d'une autre façon,
- on produit un message (Anf-N) de demande, le message (Anf-N) de demande comprenant au moins une information sur l'objet,
- on détermine une adresse (DVA.1, DVA.2) de message, en fonction des caractérisations d'objet déterminées,
- on transmet le message (Anf-N) de demande à l'adresse (DVA.1, DVA.2) de message déterminée,
- l'installation (Reg-SAn1) de tri d'enregistrement éjecte l'objet, et
- l'objet séjourne dans un accumulateur (RL) tampon,
à chaque instant (Ausf-T(i)) d'exécution, on déclenche l'opération suivant laquelle tous les objets, qui se trouvent dans l'accumulateur (RL) tampon à l'instant (Ausf-T(i)) d'exécution,
- sont prélevés de l'accumulateur (RL) tampon et
- dans une passe (Ausf-D1(i)) d'exécution, passent dans une installation (Ausf-SAn1) de tri d'exécution,
l'installation (Ausf-SAn1) de tri d'exécution identifie dans cette passe (Ausf-D1(i)) d'exécution chaque objet, dont le prélèvement de l'accumulateur (RL) tampon a été déclenché à cet instant (Ausf-T(i)) d'exécution et qui passe dans l'installation (Ausf-SAn1) de tri d'exécution
et
dans chaque passe (Ausf-D1(i)) d'exécution, on effectue pour chaque objet identifié les stades dans lesquels
- on contrôle si, pour cet objet, un message (Ant-N) de réponse est arrivé ou non,
- en utilisant, comme message (Ant-N) de réponse pour l'objet, un message arrivant qui se rapporte à cet objet et qui précise une manipulation qui est à effectuer avec cet objet,
- ensuite, si l'existence d'un message de réponse (Ant-N) pour cet objet est constatée, on déclenche les stades dans lesquels
- on transporte l'objet à une installation (Bpl.1, Bpl.2, Bpl.S) de traitement et
- on effectue à cette installation (Bpl.1, Bpl.2, Bpl.S) de traitement sur l'objet la manipulation qui est précisée dans le message (Ant-N) de réponse, et
- sinon, l'installation (Ausf-SAn1) de tri d'exécution éjecte l'objet, et l'objet séjourne à nouveau dans l'accumulateur (RL) tampon, et
ensuite, si dans le laps de temps (Aufb-ZR) de conservation, il arrive un message (Ant-N) de réponse qui se rapporte à un objet dans l'accumulateur (RL) tampon et précise une manipulation qui est à effectuer avec cet objet,
- on prélève l'objet de l'accumulateur (RL) tampon et
- on déclenche l'exécution de la manipulation précisée dans le message (Ant-N) de réponse.

2. Procédé suivant la revendication 1,
**caractérisé en ce que**
- chaque instant (Ausf-T(i)) d'exécution prescrit se trouve dans le temps avant le laps de temps (Aufb-ZR) de conservation et
- on effectue chaque passe (Ausf-D1(i)) d'exécution avant le laps de temps (Aufb-ZR) de conservation.

3. Procédé suivant la revendication 1,
**caractérisé en ce que**
- on effectue chaque passe (Ausf-D1(i)) d'exécution après le laps de temps (Aufb-ZR) de conservation et
- au moins un message (Anf-N) de demande pour un objet comprend une caractérisation du premier instant (Ausf-T(1)) d'exécution.

4. Procédé suivant l'une des revendications 1 à 3,
**caractérisé en ce que**
en présence d'un message (Ant-N) de réponse pour un objet, on déclenche au moins l'une des manipulations suivantes précisées dans le message (Ant-N) de réponse :
- on transporte l'objet à un point de destination qui est fixé par la caractérisation d'objet déterminée sur l'objet,
- on détruit l'objet,
- on produit une information supplémentaire sur l'objet et on la transmet en tant que message supplémentaire de demande à une autre adresse de message,
- dans lequel, l'autre adresse de message est précisée dans les messages de réponse pour cet objet ou est la même que l'adresse de message déterminée.

5. Procédé suivant la revendication 4,
**caractérisé en ce que**
chaque objet comprend
- un élément de conditionnement et
- au moins un contenu
chaque contenu d'un objet se trouve dans l'élément de conditionnement avant le début du traitement et
le stade de production , en réaction à un message (Ant-N) de réponse, de l'information supplémentaire sur l'objet comprend les stades, dans lesquels
- on prélève chaque contenu de l'élément de conditionnement,
- on produit respectivement au moins une reproduction disponible sur ordinateur de chaque contenu prélevé,
- chaque contenu séjourne dans un autre élément de conditionnement, de manière à ce qu'après le séjour, tous les contenus se trouvent dans au moins un autre élément de conditionnement,
- chaque autre élément de conditionnement, ainsi rempli, séjourne à nouveau dans l'accumulateur (RL) tampon et
- on transmet la respectivement au moins une reproduction par contenu, comme partie constitutive du message de demande supplémentaire à l'autre adresse de message.

6. Procédé suivant l'une des revendications 1 à 5, **caractérisé en ce que**
l'installation (Ausf-SAn1) de tri d'exécution éjecte dans une passe (Ausf-D1(i)) d'exécution un objet
- si, dans une sortie (Bpl-Aus.1, Bpl-Aus.2, Bpl-Aus.S) de tri de traitement de l'installation (Ausf-SAn1) de tri d'exécution, un message (Ant-N) de réponse pour l'objet est arrivé et
- éjecte sinon l'objet dans une sortie (ZwSp-Aus) de tri pour l'accumulateur tampon de l'installation (Ausf-SAn1) de tri d'exécution,
tous les objets sortant de la sortie (ZwSp-Aus) de tri pour l'accumulateur tampon séjournent dans l'accumulateur (RL) tampon et
tous les objets sortant de chaque sortie (Bpl-Aus.1, Bpl-Aus.2, Bpl-Aus.S) de traitement sont transportés vers respectivement une installation (Bpl.1, Bpl.2, Bpl.S) de traitement où les manipulations précisées sont effectuées.

7. Procédé suivant l'une des revendications 1 à 6, **caractérisé en ce que**
on prescrit au moins un instant (Prüf-T(1), ..., Prüf-T(m)) de contrôle,
dans lequel chaque instant (Prüf-T(1), ..., Prüf-T(m)) de contrôle prescrit se trouve dans le laps de temps (Aufb-ZR) de conservation,
à chaque instant (Prüf-T(1), ..., Prüf-T(m)) de contrôle, on déclenche l'exécution des stades dans lesquels,
- on détermine les messages de réponse à traiter qui sont arrivés,
- dans lequel, un message (Ant-N) de réponse à traiter est un message de réponse tel que,
- il est arrivé après le dernier instant (Ausf-T(n)) d'exécution et
- il se rapporte à un objet qui se trouve encore dans l'accumulateur (RL) tampon et
pour chaque message (Ant-N) de réponse à traiter, on effectue les stades dans lesquels
- on prélève de l'accumulateur (RL) tampon l'objet qui se rapporte à ce message (Ant-N) de réponse et
- on déclenche l'exécution des manipulations précisées dans le message (Ant-N) de réponse.

8. Procédé suivant l'une des revendications 1 à 7,
**caractérisé en ce que**
on utilise plusieurs accumulateurs tampons,
après la passe (Ausf-D1(i)) d'exécution pendant un instant (Ausf-T(i)) d'exécution
on choisit un accumulateur tampon,
qui peut recevoir tous les objets,
- qui sont passés dans la passe d'exécution dans l'installation (Ausf-SAn1) de tri d'exécution et
- pour lesquels, le contrôle indique qu'il n'y a pas de message (Ant-N) de réponse et
on fait séjourner ces objets dans les accumulateurs tampons sélectionnés.

9. Procédé suivant l'une des revendications 1 à 8, **caractérisé en ce que**
on prescrit au moins trois instants (Ausf-T(1), Ausf-T(2), Ausf-T(3)) d'exécution, de manière à ce que
- la distance dans le temps entre le premier instant (Ausf-T1)) d'exécution et le deuxième instant (Ausf-T(2)) d'exécution soit plus petite
- que la distance dans le temps entre le deuxième instant (Ausf-T(2)) d'exécution et le troisième instant (Ausf-T(3)) d'exécution.

10. Procédé suivant l'une des revendications 1 à 9, **caractérisé en ce que**
on utilise plusieurs installations (Bpl.1, Bpl.2, Bpl.S) de traitement,
l'installation (Ausf-San1) de tri d'exécution a plusieurs sorties (Bpl-Aus.1, Bpl-Aus.2, Bpl-Aus.S) de tri, qui sont associées respectivement à une installation (Bpl.1, Bpl.2, Bpl.S) de traitement,
dans chaque passe (Ausf-D1(j)) d'exécution, lorsqu'arrive pour un objet un message (Ant-N) de réponse qui précise une manipulation,
- on sélectionne une installation (Bpl.1, Bpl.2, Bpl.S) de traitement, en fonction de la manipulation et
- on éjecte l'objet dans la sortie (Bpl-Aus.1, Bpl-Aus.2, Bpl-Aus.S) de tri,
- qui est associée à l'installation (Bpl.1, Bpl.2, Bpl.S) de traitement sélectionnée.

11. Dispositif de traitement de plusieurs objets,
dans lequel
chaque objet est pourvu de, respectivement, une caractérisation,
le dispositif comprend
- une mémoire (Zp-Ds) de données d'instant,
- un accumulateur (RL) tampon,
- une installation (Ausf-SAn1) de tri d'exécution,
- une installation (Reg-SAn1) de tri d'enregistrement,
- au moins une installation (Bpl-Aus.1, Bpl-Aus.2, Bpl-Aus.S) de traitement,
- un dispositif (NEE) de production de messages,
- un dispositif (NÜE) de transmission de messages et
- un dispositif (NAE) d'exploitation de messages,
dans la mémoire (Zp-Ds) de données d'instants, sont précisés
- un instant d'exécution ou
- une suite de plusieurs instants (Ausf-T(1), ..., Ausf-T(n)) d'exécution qui se succèdent, ainsi que
- un laps de temps (Aufb-ZR) maximum de conservation, l'installation (Reg-SAn1) de tri d'enregistrement est conformée, de manière à ce que tous les objets passent dans l'installation (Reg-SAn1) de tri d'enregistrement, et le dispositif est conformé pour effectuer, pour chaque objet qui passe, les stades dans lesquels,
- l'installation (Reg-SAn1) de tri d'enregistrement déchiffre la caractérisation sur l'objet ou la détermine d'une autre façon,
- le dispositif (NEE) de production de messages produit un message (Anf-N) de demande, le message (Anf-N) de demande comprenant au moins une information sur l'objet,
- le dispositif (NEE) de production de messages détermine une adresse (DVA.1, DVA.2) de message, en fonction des caractérisations d'objet déterminées,
- le dispositif (NÜE) de transmission de messages déclenche la transmission du message (Anf-N) de demande produit à l'adresse (DVA.1, DVA.2) de message déterminée et
- l'objet séjourne dans l'accumulateur (RL) tampon,
le dispositif est conformé en outre pour déclencher à chaque instant (Ausf-T(1), ..., Ausf-T(n)) d'exécution, l'opération dans laquelle
- tous les objets, qui se trouvent à l'instant (Ausf-T(i)) d'exécution dans l'accumulateur (RL) tampon, sont prélevés de l'accumulateur tampon et
- les objets prélevés passent dans l'installation (Ausf-SAn1) de tri d'exécution dans une passe (Ausf-D1(i)) de tri d'exécution pendant cet instant (Ausf-T(i)) d'exécution,
l'installation (Ausf-SAn1) de tri d'exécution étant conformée en outre pour, lors de cette passe (Ausf-D1(i)) d'exécution, identifier chaque objet, dont le prélèvement de l'accumulateur (RL) tampon a été déclenché à cet instant (Ausf-T(i)) d'exécution et qui passe dans l'installation (Ausf-SAn1) de tri d'exécution, le dispositif étant conformé pour effectuer dans chaque passe (Ausf-D1(i)) d'exécution pour chaque objet identifié, les stades dans lesquels
- le dispositif (NAE) d'exploitation des messages contrôle s'il est arrivé un message (Ant-N) de réponse pour cet objet,
- dans lequel, on utilise comme message (Ant-N) de réponse pour l'objet, un message arrivant qui se rapporte à cet objet et qui précise une manipulation qui est à effectuer avec cet objet,
- si le dispositif (NAE) d'exploitation des messages constate la présence d'un message (Ant-N) de réponse pour cet objet, le dispositif déclenche les stades dans lesquels
- on transporte l'objet à une installation (Bpl.1, Bpl.2, Bpl.S) de traitement du dispositif et
- on effectue avec l'objet la manipulation qui est précisée dans le message de réponse et
- sinon l'installation (Ausf-SAn1) de tri d'exécution éjecte l'objet et
- l'objet séjourne à nouveau dans l'accumulateur (RL) tampon et
le dispositif est conformé en outre pour,
si, dans le laps de temps (Aufb-ZR) de conservation, un message (Ant-N) de réponse arrive dans le dispositif, message qui se rapporte à un objet dans l'accumulateur (RL) tampon et précise une manipulation, effectuer les stades dans lesquels
- on prélève l'objet de l'accumulateur (RL) tampon,
- le dispositif déclenche les stades de transport de l'objet à une installation (Bpl-Aus.1, Bpl-Aus.2, Aus.S) de traitement du dispositif et effectue avec l'objet la manipulation qui est précisée dans le message (Ant-N) de réponse.
